(19) Europäisches Patentamt
European Patent Office
Office européen des brevets

(11) **EP 2 111 999 A1**

(12) **EUROPEAN PATENT APPLICATION**
published in accordance with Art. 153(4) EPC

(43) Date of publication:
**28.10.2009 Bulletin 2009/44**

(21) Application number: **07744992.4**

(22) Date of filing: **11.06.2007**

(51) Int Cl.:
***B41M 5/26*** *(2006.01)* ***B41M 5/28*** *(2006.01)*
***B41M 5/36*** *(2006.01)* ***G11B 7/0045*** *(2006.01)*
***G11B 7/24*** *(2006.01)*

(86) International application number:
**PCT/JP2007/061700**

(87) International publication number:
**WO 2008/090638 (31.07.2008 Gazette 2008/31)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **26.01.2007 JP 2007016321**

(71) Applicant: **Fujifilm Corporation**
**Tokyo 106-0031 (JP)**

(72) Inventors:
- **MIKOSHIBA, Hisashi**
**Minami-ashigara-shi**
**Kanagawa 250-0193 (JP)**
- **SHIBATA, Michihiro**
**Odawara-shi**
**Kanagawa 250-0001 (JP)**
- **SETO, Nobuo**
**Minami-ashigara-shi**
**Kanagawa 250-0193 (JP)**

(74) Representative: **HOFFMANN EITLE**
**Patent- und Rechtsanwälte**
**Arabellastrasse 4**
**81925 München (DE)**

# (54) OPTICAL RECORDING MEDIUM, AND VISIBLE INFORMATION RECORDING METHOD

(57) The present invention relates to an optical recording medium comprising a visible information recording layer on a support. The visible information recording layer comprises a given dye. The optical recording medium may further comprise a recording layer capable of recording and/or reproducing information by irradiation of a laser beam. The visible information is recorded by using the same laser bean as that used in recording information on the recording layer.

EP 2 111 999 A1

## Description

### CROSS-REFERENCE TO RELATED APPLICATIONS

This application claims the benefit of priority to Japanese Patent Application No. 2007-16321 filed on January 26, 2007, which is expressly incorporated herein by reference in its entirety.

### TECHNICAL FIELD

The present invention relates to an optical recording medium, and more particularly, to an optical recording medium having a recording layer for recording music data and the like, and a visible information recording layer for recording visible information to identify recorded data. The present invention further relates to a method of recording visible information on the optical recording medium.

### TECHNICAL BACKGROUND

Optical information recording media (optical disks) on which information can be recorded once by means of a laser beam are known. Such optical disks include recordable CDs (known as "CD-Rs") and recordable digital versatile disks (known as "DVD-Rs").

Optical disks, having a label on which visible information (such as the song titles of music data recorded on the recording side, titles for identifying recorded data, and the like) is printed that is adhered on the opposite side from the side on which music data and the like are recorded, are known. Such optical disks are prepared by using a printer or the like to print in advance titles and the like on a round label sheet, which is then adhered on the opposite side from the optical disk recording side.

However, in addition to an optical disk drive, a printer is required when preparing an optical disk with a label on the surface of which are recorded desired visible images such as titles. Accordingly, a complex operation is required, for example, after using an optical disk drive to record data on the recording surface of a given optical disk, it is necessary to remove the optical disk from the optical disk drive and attach the label sheet that has been printed by the printer separately prepared.

Accordingly, optical recording media have been proposed that permit the use of laser markers on the opposite surface from the recording surface to vary the contrast between the surface and the background and indicate information (for example, see Japanese Unexamined Patent Publication (KOKAI) Heisei No. 11-66617, which is expressly incorporated herein by reference in its entirety). The use of such a method permits the printing of a desired image on the label surface of an optical disk with an optical disk drive without separate preparation of printers and the like. However, this method affords low sensitivity and requires the use of a high-power gas laser such as a carbon dioxide gas laser. The visible image that is formed by such a laser beam is of low contrast and affords poor visibility. Further, there are problems in that when manufacturing a coating-use ink employing a dye for image formation, the dye does not have adequate solubility in the ink solvent, and the dye in the image-forming layer crystallizes over long periods of time.

### DISCLOSURE OF THE INVENTION

Under such circumstances, the object of the present invention is to provide an optical recording medium permitting the recording of visible information with high contrast and good visibility, and more particularly, to provide an optical recording medium permitting the recording of visible information with high contrast and good visibility with the laser beam that is used to record information in the recording layer.

The present inventors conducted extensive research into achieving the above-stated objects, and discovered that by employing a prescribed dye in the visible information recording layer of an optical recording medium, it was possible to form visible information with high contrast and good visibility.

The present invention relates to an optical recording medium (referred to as "Optical recording medium 1" or "Medium 1", hereinafter) comprising a visible information recording layer on a support, wherein the visible information recording layer comprises a dye denoted by the following general formula (1):

[Chem. 1]

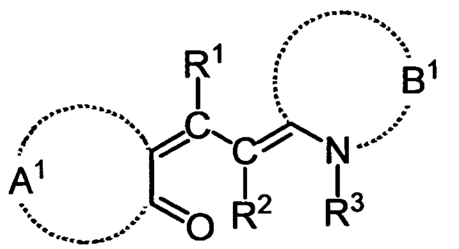

General formula (1)

wherein, in general formula (1), each of $R^1$, $R^2$, and $R^3$ independently denotes a hydrogen atom or a monovalent substituent, $A^1$ denotes an atom group forming a heterocyclic ring with carbon atoms bonded at either end, and $B^1$ denotes an atom group forming a heterocyclic ring with a carbon atom and a nitrogen atom at either end.

According to one embodiment, the dye denoted by general formula (1) is a dye denoted by the following general formula (2):

[Chem. 2]

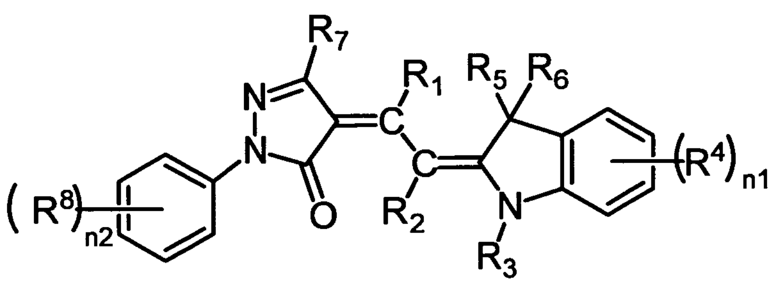

General formula (2)

wherein, in general formula (2), $R^1$, $R^2$, and $R^3$ are defined identically with $R^1$, $R^2$, and $R^3$ in general formula (1), respectively, each of $R^5$, $R^6$, and $R^7$ independently denotes a hydrogen atom or a monovalent substituent, each of $R^4$ and $R^8$ independently denotes a monovalent substituent, n1 denotes an integer ranging from 0 to 4, and n2 denotes an integer ranging from 0 to 5.

The present invention further relates to an optical recording medium (referred to as "Optical recording medium 2" or "Medium 2", hereinafter) comprising a visible information recording layer on a support, wherein the visible information recording layer comprises a dye denoted by the following general formula (3):

[Chem. 3]

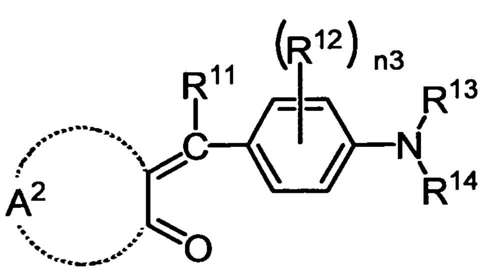

General formula (3)

wherein, in general formula (3), each of $R^{11}$, $R^{13}$, and $R^{14}$ independently denotes a hydrogen atom or a monovalent substituent, $R^{12}$ denotes a monovalent substituent, $A^2$ denotes an atom group forming a heterocyclic ring with carbon atoms bonded at either end, and n3 denotes an integer ranging from 0 to 4.

The present invention further relates to an optical recording medium (referred to as "Optical recording medium 3" or "Medium 3", hereinafter) comprising a visible information recording layer on a support, wherein the visible information recording layer comprises a dye denoted by the following general formula (4):

[Chem. 4]

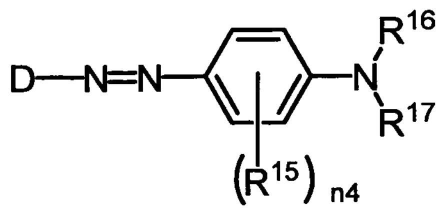

General formula (4)

wherein, in general formula (4), D denotes a diazonium salt-derived arocyclic group or aromatic heterocyclic group, each of $R^{16}$ and $R^{17}$ independently denotes a hydrogen atom or a monovalent substituent, $R^{15}$ denotes a monovalent substituent, and n4 denotes an integer ranging from 0 to 4.

The present invention further relates to an optical recording medium (referred to as "Optical recording medium 4" or "Medium 4", hereinafter) comprising a visible information recording layer on a support, wherein the visible information recording layer comprises a dye denoted by the following general formula (5):

[Chem. 5]

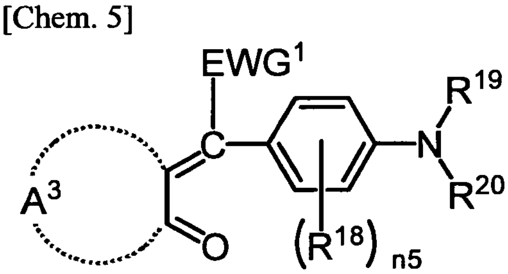

General formula (5)

wherein, in general formula (5), $A^3$ denotes an atom group forming a heterocyclic ring with carbon atoms bonded at either end, $EWG^1$ denotes an electron-withdrawing group, $R^{18}$ denotes a monovalent substituent, each of $R^{19}$ and $R^{20}$ independently denotes a hydrogen atom or a monovalent substituent, and n5 denotes an integer ranging from 0 to 4.

The present invention further relates to an optical recording medium (referred to as "Optical recording medium 5" or "Medium 5", hereinafter) comprising a visible information recording layer on a support, wherein the visible information recording layer comprises a dye denoted by the following general formula (6):

[Chem. 6]

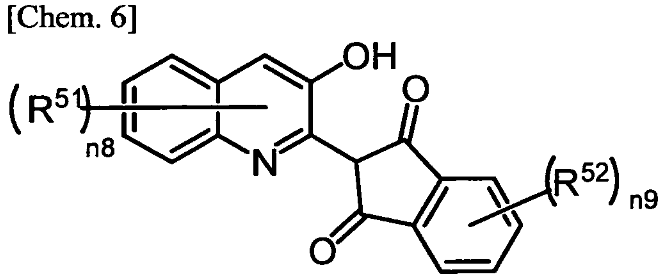

General formula (6)

wherein, in general formula (6), each of $R^{51}$ and $R^{52}$ independently denotes a monovalent substituent, n8 denotes an integer ranging from 0 to 5, and n9 denotes an integer ranging from 0 to 4.

The present invention further relates to an optical recording medium (referred to as "Optical recording medium 6" or "Medium 6", hereinafter) comprising a visible information recording layer on a support, wherein the visible information recording layer comprises a dye denoted by the following general formula (7):

[Chem. 7]

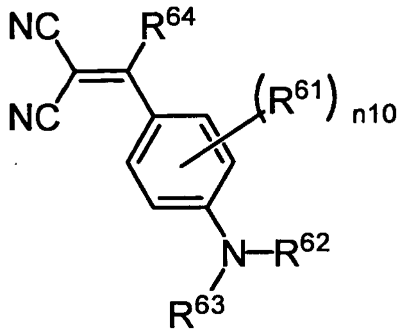

General formula (7)

wherein, in general formula (7), $R^{64}$ denotes a hydrogen atom or a monovalent substituent, $R^{61}$ denotes a monovalent substituent, each of $R^{63}$ and $R^{62}$ independently denotes a hydrogen atom, substituted or unsubstituted alkyl group, substituted or unsubstituted aryl group, or substituted or unsubstituted heterocyclic group, and n10 denotes an integer ranging from 0 to 4.

The present invention further relates to an optical recording medium (referred to as "Optical recording medium 7" or "Medium 7", hereinafter) comprising a visible information recording layer on a support, wherein the visible information recording layer comprises a dye denoted by the following general formula (8):

[Chem. 8]

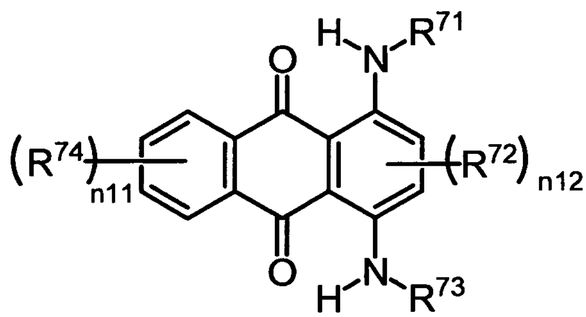

General formula (8)

wherein, in general formula (8), each of $R^{71}$ and $R^{73}$ independently denotes a hydrogen atom or a monovalent substituent, each of $R^{72}$ and $R^{74}$ independently denotes a monovalent substituent, n11 denotes an integer ranging from 0 to 4, and n12 denotes an integer ranging from 0 to 2.

The present invention further relates to an optical recording medium (referred to as "Optical recording medium 8" or "Medium 8", hereinafter) comprising a visible information recording layer on a support, wherein the visible information recording layer comprises a dye denoted by the following general formula (9):

[Chem. 9]

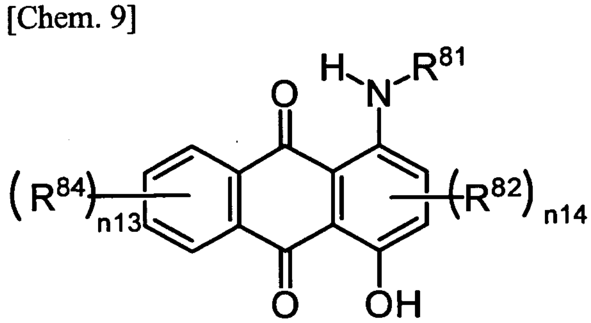

General formula (9)

wherein, in general formula (9), $R^{81}$ denotes a hydrogen atom or a monovalent substituent, each of $R^{82}$ and $R^{84}$ independently denotes a monovalent substituent, n13 denotes an integer ranging from 0 to 4, and n14 denotes an integer

ranging from 0 to 2.

The present invention further relates to an optical recording medium (referred to as "Optical recording medium 9" or "Medium 9", hereinafter) comprising a visible information recording layer on a support, wherein the visible information recording layer comprises a dye denoted by the following general formula (10):

[Chem. 10]

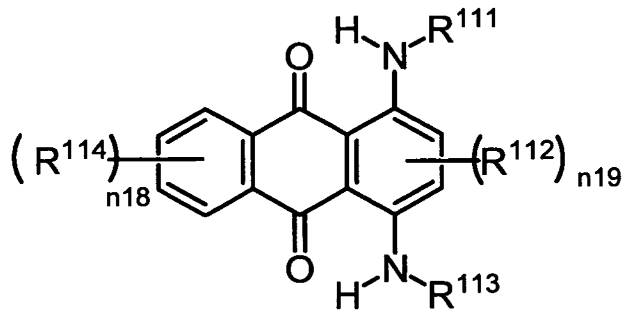

General formula (10)

wherein, in general formula (10), each of $R^{111}$ and $R^{113}$ independently denotes a hydrogen atom or a monovalent substituent, each of $R^{112}$ and $R^{114}$ independently denotes a monovalent substituent, n18 denotes an integer ranging from 0 to 4, and n19 denotes an integer ranging from 0 to 2.

According to one embodiment, the above monovalent substituent is a halogen atoms, or a substituted or unsubstituted alkyl groups, alkenyl groups, alkynyl groups, aryl groups, heterocyclic groups, cyano groups, alkoxy groups, aryloxy groups, acyloxy groups, carbamoyloxy groups, alkoxycarbonyloxy groups, aryloxycarbonyloxy groups, amino groups, acylamino groups, aminocarbonylamino groups, alkoxycarbonylamino groups, aryloxycarbonylamino groups, sulfamoylamino groups, alkylsulfonylamino groups, arylsulfonylamino groups, alkylthio groups, sulfamoyl groups, alkylsulfinyl groups, arylsulfinyl groups, alkylsulfonyl groups, arylsulfonyl groups, acyl groups, aryloxycarbonyl groups, alkoxycarbonyl groups, carbamoyl groups, arylazo groups, heterocyclic azo groups or imido groups.

According to one embodiment, in the general formula (2), $R^1$ denotes a hydrogen atom, $R^2$ denotes a hydrogen atom, $R^3$ denotes a substituted or unsubstituted alkyl group having 1 to 6 carbon atoms, $R^4$ denotes a substituted or unsubstituted alkyl group having 1 to 6 carbon atoms, $R^5$ denotes a substituted or unsubstituted alkyl group having 1 to 6 carbon atoms, $R^6$ denotes a substituted or unsubstituted alkyl group having 1 to 6 carbon atoms, $R^7$ denotes a substituted or unsubstituted dialkylamino group having 1 to 12 carbon atoms, $R^8$ denotes a substituted or unsubstituted alkoxycarbonyl group having 1 to 6 carbon atoms or a chlorine atom, n1 denotes an integer ranging from 0 to 3, and n2 denotes an integer ranging from 0 to 3.

According to one embodiment, in the general formula (3), $A^2$ denotes 2-pyrazoline-5-one comprising a substituent, $R^{11}$ denotes a hydrogen atom, $R^{12}$ denotes a substituted or unsubstituted alkyl group having 1 to 6 carbon atoms or a substituted or unsubstituted alkoxy group having 1 to 6 carbon atoms, $R^{13}$ denotes a substituted or unsubstituted alkyl group having 1 to 6 carbon atoms, $R^{14}$ denotes a substituted or unsubstituted alkyl group having 1 to 6 carbon atoms, and n3 is 0 or 1.

According to one embodiment, in the general formula (4), D denotes a monovalent group derived from an isothiazole ring comprising a substituent or a monovalent group derived from a 1,3,4-thiadiazole ring comprising a substituent, $R^{15}$ denotes an acylamino group, $R^{16}$ denotes a substituted or unsubstituted alkyl group having 1 to 6 carbon atoms, $R^{17}$ denotes a substituted or unsubstituted alkyl group having 1 to 6 carbon atoms, and n4 denotes an integer ranging from 0 to 4.

According to one embodiment, in the general formula (5), $A^3$ denotes 2-pyrazoline-5-one comprising a substituent, $EWG^1$ denotes a cyano group, $R^{18}$ denotes a substituted or unsubstituted alkyl group having 1 to 6 carbon atoms or a substituted or unsubstituted alkoxy group having 1 to 6 carbon atoms, $R^{19}$ denotes a substituted or unsubstituted alkyl group having 1 to 6 carbon atoms, $R^{20}$ denotes a substituted or unsubstituted alkyl group having 1 to 6 carbon atoms, and n5 denotes an integer ranging from 0 to 4.

According to one embodiment, in the general formula (6), $R^{51}$ denotes an alkyl group having 1 to 6 carbon atoms, $R^{52}$ denotes a substituted or unsubstituted carbamoyl group or aryloxycarbonyl group having 6 to 10 carbon atoms or alkoxycarbonyl group having 1 to 6 carbon atoms, n8 denotes an integer ranging from 0 to 3, and n9 denotes an integer ranging from 0 to 3.

According to one embodiment, in the general formula (7), $R^{61}$ denotes a substituted or unsubstituted alkyl group having 1 to 6 carbon atoms, $R^{62}$ denotes a substituted or unsubstituted alkyl group having 1 to 6 carbon atoms, $R^{63}$ denotes a substituted or unsubstituted alkyl group having 1 to 6 carbon atoms, $R^{64}$ denotes a hydrogen atom, and

n10 denotes an integer ranging from 0 to 4.

According to one embodiment, in the general formula (8), $R^{71}$ denotes a hydrogen atom, $R^{72}$ denotes a substituted or unsubstituted aryloxy group having 6 to 12 carbon atoms, $R^{73}$ denotes a hydrogen atom, n11 denotes 0, and n12 denotes an integer ranging from 0 to 2.

According to one embodiment, in the general formula (9), $R^{81}$ denotes a hydrogen atom, $R^{82}$ denotes an aryloxy group, n13 denotes 0, and n14 denotes 1 or 2.

According to one embodiment, in the general formula (10), $R^{111}$ denotes a substituted or unsubstituted alkyl group having 1 to 6 carbon atoms or a substituted or unsubstituted aryl group having 6 to 10 carbon atoms, $R^{113}$ denotes a substituted or unsubstituted alkyl group having 1 to 6 carbon atoms or a substituted or unsubstituted aryl group having 6 to 10 carbon atoms, n18 is 0, and n19 is 0.

According to one embodiment, the visible information recording layer further comprises a cyanine dye denoted by the general formula (I):

[Chem. 11]

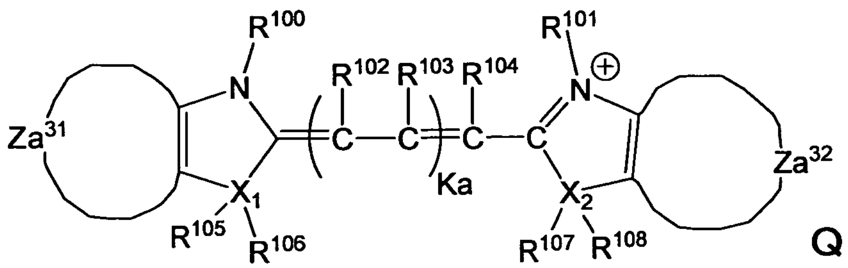

General formula (I)

wherein, in general formula (I), each of $Za^{31}$ and $Za^{32}$ independently denotes an atom group forming a carbon ring or heterocyclic ring, each of $R^{100}$, $R^{101}$, $R^{102}$, $R^{103}$, $R^{104}$, $R^{105}$, $R^{106}$, $R^{107}$, and $R^{108}$ independently denotes a hydrogen atom or a monovalent substituent, each of $X_1$ and $X_2$ independently denotes a carbon atom or a hetero atom, Ka denotes 2 or 3, plural $R^{102}$s and $R^{103}$s present may be identical or different, and Q denotes a monovalent anion.

According to one embodiment, the optical recording medium further comprises a recording layer capable of recording and/or reproducing information by irradiation of a laser beam. The optical recording medium may comprise a first support, the recording layer, a reflective layer, the visible information recording layer, and a second support in this order.

According to one embodiment, the optical recording medium is disk-shaped.

An another aspect of the present invention relates to a method of recording visible information on the visible information recording layer of the optical recording medium comprising a recording layer capable of recording and/or reproducing information by irradiation of a laser beam. In the method of recording visible information, the visible information is recorded by using the same laser bean as that used in recording information on the recording layer.

An another aspect of the present invention relates to a method of recording visible information on the visible information recording layer of the optical recording medium being disk-shaped. In the method of recording visible information, the visible information is recorded by using a laser beam that oscillates in a radial direction of the optical recording medium as well as is irradiated plural times on approximately identical paths.

According to the present invention, an optical recording medium permitting the recording of visible information with high contrast and good visibility can be provided. Further, the dye employed in the present invention has adequate solubility in the solvent, so the optical recording medium is readily manufactured. Since the visible information recording layer comprising the dye has good stability over time, an optical recording medium with good storage properties can be provided. Further, the dye is suited to systems of forming images by new recording methods differing from common digital data recording, and permits the formation of visible information with high contrast, sharpness, and good resistance to light in such systems.

Further, the image that is drawn in the visible information recording layer is required to exhibit the desired color tones that are intended by the user. To achieve this, a recording medium for image drawing is demanded that employs dyes having various color tones. According to the present invention, it is possible to create an optical recording medium exhibiting desired sharp color tones with high contrast by selecting dyes having various color tones that are suitable to image drawing and by selecting multiple dyes with different color tones to adjust the mix ratio.

## BEST MODE FOR CARRYING OUT THE INVENTION

The present invention will be described in further detail below.

[Optical recording medium]

All the optical recording media 1 to 9 of the present invention comprise a visible information recording layer on a support, and comprises a given dye in the visible information recording layer. Dyes comprised in the visible information recording layer of each optical recording medium will be described in order below.

<Dyes>

Medium 1

Medium 1 comprises the dye denoted by the following general formula (1) in the visible information recording layer.

[Chem. 12]

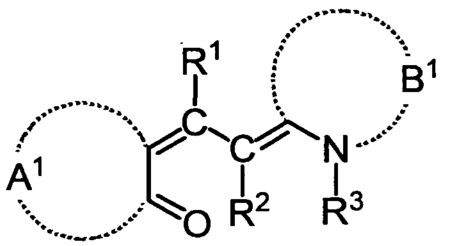

General formula (1)

In general formula (1), each of $R^1$, $R^2$, and $R^3$ independently denotes a hydrogen atom or a monovalent substituent. The monovalent substituent will be described in greater detail. Examples of the monovalent substituent are: halogen atoms, alkyl groups (including cycloalkyl and bicycloalkyl groups), alkenyl groups (including cycloalkenyl and bicycloalkenyl groups), alkynyl groups, aryl groups, heterocyclic groups, cyano groups, alkoxy groups, aryloxy groups, acyloxy groups, carbamoyloxy groups, alkoxycarbonyloxy groups, aryloxycarbonyloxy groups, amino groups (including anilino groups), acylamino groups, aminocarbonylamino groups, alkoxycarbonylamino groups, aryloxycarbonylamino groups, sulfamoylamino groups, alkylsulfonylamino groups, arylsulfonylamino groups, alkylthio groups, sulfamoyl groups, alkylsulfinyl groups, arylsulfinyl groups, alkylsulfonyl groups, arylsulfonyl groups, acyl groups, aryloxycarbonyl groups, alkoxycarbonyl groups, carbamoyl groups, arylazo groups, heterocyclic azo groups, and imido groups. These groups may comprise substituents. Each of these groups will be described in greater detail below.

Examples of the above halogen atoms are fluorine, chlorine, bromine, and iodine atoms. Of these, chlorine and iodine atoms are desirable, and chlorine atoms are preferred.

The above alkyl groups include substituted and unsubstituted cycloalkyl and bicycloalkyl groups, as well as linear and branched substituted and unsubstituted alkyl groups. The number of carbon atoms in these linear and branched substituted and unsubstituted alkyl groups desirably falls within a range of 1 to 30. Specific examples thereof are methyl, ethyl, n-propyl, isopropyl, t-butyl, n-octyl, eicosyl, 2-chloroethyl, 2-cyanoethyl, or 2-ethylhexyl groups. The number of carbon atoms in the above substituted and unsubstituted cycloalkyl groups desirably falls within a range of 3 to 30. Specific examples thereof are cyclohexyl groups, cyclopentyl groups, and 4-n-dodecylcyclohexyl groups. A bicycloalkyl group having 5 to 30 carbon atoms, that is, a monovalent group in the form of a bicycloalkane having 5 to 30 carbon atoms from which a hydrogen atom has been removed, is desirable as the above substituted or unsubstituted bicycloalkyl group. Specific examples thereof are bicyclo[1,2,2]heptane-2-yl and bicyclo[2,2,2]octane-3-yl. Alkyl groups comprising an even larger number of cyclic structures, such as a tricyclic structure, are included. The alkyl groups in the substituents described further below (such as the alkyl group in an alkylthio group) also denote alkyl groups based on the above concept.

The above alkenyl groups include substituted and unsubstituted cycloalkenyl and bicycloalkenyl groups, as well as linear, branched, and cyclic substituted and unsubstituted alkenyl groups. The number of carbon atoms in these linear, branched, and cyclic substituted and unsubstituted alkenyl groups desirably falls within a range of 2 to 30. Specific examples thereof are vinyl, allyl, prenyl, geranyl, and oleyl groups. A substituted or unsubstituted cycloalkenyl group having 3 to 30 carbon atoms, that is, a monovalent group in the form of a cycloalkene having 3 to 30 carbon atoms from which a hydrogen atom has been removed, is desirable as the above substituted or unsubstituted cycloalkenyl group. Specific examples thereof are 2-cycloheptene-1-yl and 2-cyclohexene-1-yl. A substituted or unsubstituted bicycloalkenyl group having 5 to 30 carbon atoms, that is, a monovalent group in the form of a bicycloalkene having a single double bond from which a hydrogen atom has been removed is desirable as the above substituted or unsubstituted bicycloalkenyl

group. Specific examples thereof are bicyclo[2,2,1]hepto-2-ene-1-yl and bicyclo[2,2,2]octo-2-ene-4-yl.

By way of example, the above alkynyl group is a substituted or unsubstituted alkynyl group having 2 to 30 carbon atoms, specific examples of which are ethynyl and propargyl groups.

The above aryl groups are, for example, substituted or unsubstituted aryl groups having 6 to 30 carbon atoms. Specific examples thereof are phenyl, p-tolyl, naphthyl, m-chlorophenyl, and o-hexadecanoylaminophenyl groups.

Examples of the above heterocyclic groups are monovalent groups in the form of five or six-membered, substituted or unsubstituted, aromatic or nonaromatic heterocyclic compounds from which a hydrogen atom has been removed. The rings in these groups may be further condensed. Five or six-membered aromatic heterocyclic groups having 3 to 30 carbon atoms are preferred. Examples of heterocyclic groups, irrespective of substitution position, are monovalent groups corresponding to pyridine, pyrazine, pyridazine, pyrimidine, triazine, quinoline, isoquinoline, quinazoline, cinnoline, phthalazine, quinoxaline, pyrrole, indole, furan, benzofuran, thiophene, benzothiophene, pyrazole, imidazole, benzimidazole, triazole, oxazole, benzoxazole, thiazole, benzothiazole, isothiazole, benzisothiazole, thiadiazole, isooxazole, benzisooxazole, pyrrolidine, piperidine, piperazine, imidazolidine, thiazoline, and the like.

The above alkoxy groups include substituted and unsubstituted alkoxy groups. The substituted and unsubstituted alkoxy groups desirably have 1 to 30 carbon atoms. Examples of these alkoxy groups are: methoxy, ethoxy, isopropoxy, n-octyloxy, methoxyethoxy, hydroxyethoxy, and 3-carboxypropoxy groups.

The above aryloxy groups are desirably substituted or unsubstituted aryloxy groups having 6 to 30 carbon atoms. Examples of these aryloxy groups are: phenoxy, 2-methylphenoxy, 4-t-butylphenoxy, 3-nitrophenoxy, and 2-tetradecanoylaminophenoxy groups.

The above acyloxy groups are desirably formyloxy groups, substituted or unsubstituted alkylcarbonyloxy groups having 2 to 30 carbon atoms, or substituted or unsubstituted arylcarbonyloxy groups having 6 to 30 carbon atoms. Examples of these acyloxy groups are formyloxy, acetyloxy, pivaloyloxy, stearoyloxy, benzoyloxy, and p-methoxyphenylcarbonyloxy groups.

The above carbamoyloxy groups are desirably substituted or unsubstituted carbamoyloxy groups having 1 to 30 carbon atoms. Examples of these carbamoyloxy groups are N,N-dimethylcarbamoyloxy, N,N-diethylcarbamoyloxy, morpholinocarbonyloxy, N,N-di-n-octylaminocarbonyloxy, and N-n-octylcarbamoyloxy groups.

The above alkoxycarbonyloxy groups are desirably substituted or unsubstituted alkoxycarbonyloxy groups having 2 to 30 carbon atoms. Examples of these alkoxycarbonyloxy groups are methoxycarbonyloxy, ethoxycarbonyloxy, t-butoxycarbonyloxy, and n-octylcarbonyloxy groups.

The above aryloxycarbonyloxy groups are desirably substituted or unsubstituted aryloxycarbonyloxy groups having 7 to 30 carbon atoms. Examples of these aryloxycarbonyloxy groups are phenoxycarbonyloxy, p-methoxyphenoxycarbonyloxy, and p-n-hexadecyloxyphenoxycarbonyloxy groups.

The above amino groups include arylamino groups. These amino groups are desirably substituted or unsubstituted alkylamino groups having 1 to 30 carbon atoms, or substituted or unsubstituted arylamino groups having 6 to 30 carbon atoms. Examples of these amino groups are amino, methylamino, dimethylamino, anilino, N-methylanilino, diphenylamino, hydroxyethylamino, carboxyethylamino, sulfoethylamino, and 3,5-dicarboxyanilino groups.

The above acylamino groups are desirably formylamino groups, substituted or unsubstituted alkylcarbonylamino groups having 1 to 30 carbon atoms, or substituted or unsubstituted arylcarbonylamino groups having 6 to 30 carbon atoms. Examples of these acylamino groups are formylamino, acetylamino, pivaloylamino, lauroylamino, benzoylamino, and 3,4,5-tri-n-octyloxyphenylcarbonylamino groups.

The above aminocarbonylamino groups are desirably substituted or unsubstituted aminocarbonylamino groups having 1 to 30 carbon atoms. Examples of these aminocarbonylamino groups are: carbamoylamino, N,N-dimethylaminocarbonylamino, N,N-diethylaminocarbonylamino, and morpholinocarbonylamino groups.

The above alkoxycarbonylamino groups are desirably substituted or unsubstituted alkoxycarbonylamino groups having 2 to 30 carbon atoms. Examples of these alkoxycarbonylamino groups are methoxycarbonylamino, ethoxycarbonylamino, t-butoxycarbonylamino, n-octadecyloxycarbonylamino, and N-methylmethoxycarbonyl-amino groups.

The above aryloxycarbonylamino groups are desirably substituted or unsubstituted aryloxycarbonylamino groups having 7 to 30 carbon atoms. Examples of these aryloxycarbonylamino groups are phenoxycarbonylamino, p-chlorophenoxy-carbonylamino, and m-n-octyloxyphenoxycarbonylamino groups.

The above sulfamoylamino groups are desirably substituted or unsubstituted sulfamoylamino groups having 0 to 30 carbon atoms. Examples of these sulfamoylamino groups are: sulfamoylamino, N,N-dimethylaminosulfonylamino, and N-n-octylaminosulfonylamino groups.

The above alkylsulfonylamino groups are desirably substituted or unsubstituted alkylsulfonylamino groups having 1 to 30 carbon atoms. The above arylsulfonylamino groups are desirably substituted or unsubstituted arylsulfonylamino groups having 6 to 30 carbon atoms. Examples of these alkylsulfonylamino and arylsulfonylamino groups are: methylsulfonylamino, butylsulfonylamino, phenylsulfonylamino, 2,3,5-trichlorophenylsulfonylamino, and p-methylphenylsulfonylamino groups.

The above alkylthio groups are desirably substituted or unsubstituted alkylthio groups having 1 to 30 carbon

atoms. Examples of these alkylthio groups are: methylthio, ethylthio, and n-hexadecylthio groups.

The above sulfamoyl groups are desirably substituted or unsubstituted sulfamoyl groups having 0 to 30 carbon atoms. Examples of these sulfamoyl groups are: N-ethylsulfamoyl, N-(3-dodecyloxypropyl)sulfamoyl, N,N-dimethylsulfamoyl, N-acetylsulfamoyl, N-benzoylsulfamoyl, and N-(N'-phenylcarbamoyl)sulfamoyl groups.

The above alkylsulfinyl groups are desirably substituted or unsubstituted alkylsulfinyl groups having 1 to 30 carbon atoms. The above arylsulfinyl groups are desirably substituted or unsubstituted arylsulfinyl groups having 6 to 30 carbon atoms. Examples of these alkyl and arylsulfinyl groups are: methylsulfinyl, ethylsulfinyl, phenylsulfinyl, and p-methylphenylsulfinyl groups.

The above alkylsulfmyl groups are desirably substituted or unsubstituted alkylsulfonyl groups having 1 to 30 carbon atoms. The above arylsulfonyl groups are desirably substituted or unsubstituted arylsulfonyl groups having 6 to 30 carbon atoms. Examples of these alkyl and arylsulfonyl groups are methylsulfonyl, ethylsulfonyl, phenylsulfonyl, and p-toluenesulfonyl groups.

The above acyl groups are desirably formyl groups, substituted or unsubstituted alkylcarbonyl groups having 2 to 30 carbon atoms, substituted or unsubstituted arylcarbonyl groups having 7 to 30 carbon atoms, or substituted or unsubstituted heterocyclic carbonyl groups that have 4 to 30 carbon atoms and are bonded to the carbonyl group through the carbon atom. Examples of these acyl groups are: acetyl, pivaloyl, 2-chloroacetyl, stearoyl, benzoyl, p-n-octyloxyphenylcarbonyl, 2-pyridylcarbonyl, and 2-furylcarbonyl groups.

The above aryloxycarbonyl groups are desirably substituted or unsubstituted aryloxycarbonyl groups having 7 to 30 carbon atoms. Examples of these aryloxycarbonyl groups are phenoxycarbonyl, o-chlorophenoxycarbonyl, m-nitrophenoxycarbonyl, and p-t-butylphenoxycarbonyl groups.

The above alkoxycarbonyl groups are desirably substituted or unsubstituted alkoxycarbonyl groups having 2 to 30 carbon atoms. Examples of these alkoxycarbonyl groups are methoxycarbonyl, ethoxycarbonyl, t-butoxycarbonyl, and n-octadecyloxycarbonyl groups.

The above carbamoyl groups are desirably substituted or unsubstituted carbamoyl groups having 1 to 30 carbon atoms. Examples of these carbamoyl groups are: carbamoyl, N-methylcarbamoyl, N,N-dimethylcarbamoyl, N,N-di-n-octylcarbamoyl, and N-(methylsulfonyl)carbamoyl groups.

Examples of the above aryl and heterocyclic azo groups are: phenylazo, 4-methoxyphenylazo, 4-pivaloylaminophenylazo, and 2-hydroxy-4-propanoylphenylazo groups.

Examples of the above imido groups are N-succinimide and N-phthalimide groups.

Each of $R^1$ and $R^2$ desirably independently denotes a hydrogen atom, substituted or unsubstituted alkyl group, substituted or unsubstituted alkenyl group, substituted or unsubstituted aryl group, substituted or unsubstituted heterocyclic group, substituted or unsubstituted acylamino group, substituted or unsubstituted aminocarbonylamino group, substituted or unsubstituted alkoxycarbonylamino group, or substituted or unsubstituted amino group, preferably denoting a hydrogen atom or a substituted or unsubstituted alkyl group.

$R^3$ desirably denotes a hydrogen atom, substituted or unsubstituted alkyl group, substituted or unsubstituted alkenyl group, substituted or unsubstituted aryl group, or substituted or unsubstituted heterocyclic group, preferably denoting a hydrogen atom or a substituted or unsubstituted alkyl group.

In general formula (1), $A^1$ denotes an atom group forming a heterocyclic ring with carbon atoms bonded at either end. $A^1$ denotes an atom group forming an acidic nucleus. It is defmed in James, ed., The Theory of the Photographic Process, 4th Edition, Macmillan, 1977, p. 198, and F. M. Harmer, Heterocyclic CompoundsCyanine Dyes and Related Compounds, John Wiley & Sons, New York, London, 1964 Annual (which are expressly incorporated herein by reference in their entirety), and $A^1$ desirably denotes an atom group forming a five or six-membered nitrogen-containing heterocyclic ring. These may be further condensed with a benzene ring, benzofuran ring, pyridine ring, pyrrole ring, indole ring, thiophene ring, or the like. Specific examples are nuclei in the form of 2-pyrazoline-5-one, pyrazolidine-3,5-dione, imidazoline-5-one, hydantoin, 2 or 4-thiohydantoin, 2-iminooxazolidine-4-one, 2-oxazoline-5-one, 2-thiooxazoline-2,4-dione, isorhodanine, rhodanine, indane-1,3-dione, thiophene-3-one, thiophene-3-one-1,1-dioxide, indoline-2-one, indoline-3-one, 2-oxoindazolium, 5,7-dioxo-6,7-dihydrothiazolo[3,2-a]pyrimidine, 3,4-dihydroisoquinoline-4-one, 1,3-dioxane-4,6-dione, barbituric acid, 2-thiobarbituric acid, coumarin-2,4-dione, indazoline-2-one, pyrido[1,2-a]pyrimidine-1,3-dione, pyrazolo[1,5-b]quinazolone, pyrazolopyridone, 3-dicyanomethylidenyl-3-phenylpropionitrile, and Meldrum's acid, with 2-pyrazoline-5-one being desirable. These may further comprise substituents.

In general formula (1), $B^1$ denotes an atom group forming a heterocyclic ring with a carbon atom and a nitrogen atom at either end. $B^1$ denotes an atom group forming a five or six-membered nitrogen-containing heterocyclic ring. These may be further condensed with a benzene ring, benzofuran ring, pyridine ring, pyrrole ring, indole ring, thiophene ring, or the like. Examples of $B^1$ are: an oxazole nucleus having 3 to 25 carbon atoms (such as 2-3-methyloxazolyl), a thiazole nucleus having 3 to 25 carbon atoms (such as 2-3-methylthiazolyl), an imidazole nucleus having 3 to 25 carbon atoms (such as 2-1,3-diethylimidazolyl), an indolenine nucleus having 10 to 30 carbon atoms (such as 3,3-dimethylindolenine), a quinoline nucleus having 9 to 25 carbon atoms (such as 2-1-methylquinolyl), a selenazole nucleus having 3 to 25 carbon atoms (such as 2-3-methylbenzoselenazolyl), a pyridine nucleus having 5 to 25 carbon atoms (such as

2-pyridyl), a thiazoline nucleus, an oxazoline nucleus, a selenazoline nucleus, a tellurazoline nucleus, a tellurazole nucleus, a benzotellurazole nucleus, an imidazoline nucleus, an imidazo[4,5-quinoxaline] nucleus, an oxadiazole nucleus, a thiadiazole nucleus, a tetrazole nucleus, and a pyrimidine nucleus. These may further comprise substituents.

The dye denoted by the above general formula (1) is desirably the dye denoted by the following general formula (2).

[Chem. 13]

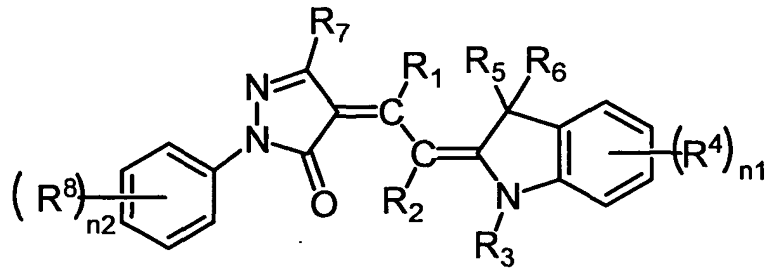

General formula (2)

General formula (2) will be described in detail below.

In general formula (2), $R^1$, $R^2$, and $R^3$ are defined identically with $R^1$, $R^2$, and $R^3$ in general formula (1), respectively. Each of $R^5$, $R^6$, and $R^7$ independently denotes a hydrogen atom or a monovalent substituent. Each of $R^4$ and $R^8$ independently denotes a monovalent substituent. Examples of these monovalent substituents are the substituents described for $R^1$, $R^2$, and $R^3$ above. n1 denotes an integer ranging from 0 to 4, and n2 denotes an integer ranging from 0 to 5.

Each of $R^4$ and $R^8$ desirably independently denotes a halogen atom, alkyl group, alkenyl group, alkynyl group, aryl group, heterocyclic group, cyano group, alkoxy group, aryloxy group, acyloxy group, carbamoyloxy group, alkoxycarbonyloxy group, aryloxycarbonyloxy group, amino group, acylamino group, aminocarbonylamino group, alkoxycarbonylamino group, aryloxycarbonylamino group, sulfamoylamino group, alkylsulfonylamino group, arylsulfonylamino group, alkylthio group, sulfamoyl group, alkylsulfinyl group, arylsulfinyl group, alkylsulfonyl group, arylsulfonyl group, acyl group, aryloxycarbonyl group, alkoxycarbonyl group, or carbamoyl group; preferably denotes a hydrogen atom, halogen atom, alkyl group, alkenyl group, aryl group, heterocyclic group, alkoxy group, aryloxy group, acyloxy group, carbamoyloxy group, alkoxycarbonyloxy group, aryloxycarbonyloxy group, amino group, acylamino group, aminocarbonylamino group, alkoxycarbonylamino group, aryloxycarbonylamino group, alkylthio group, acyl group, aryloxycarbonyl group, alkoxycarbonyl group, or carbamoyl group; more preferably denotes a halogen atom, substituted or unsubstituted alkyl group, substituted or unsubstituted alkenyl group, substituted or unsubstituted aryl group, substituted or unsubstituted heterocyclic group; and still more preferably, denotes a substituted or unsubstituted alkyl group.

$R^5$ and $R^6$ are desirably identical to $R^1$ and $R^2$ in general formula (1). Each preferably independently denotes a hydrogen atom, substituted or unsubstituted alkyl group, substituted or unsubstituted alkenyl group, substituted or unsubstituted aryl group, or substituted or unsubstituted heterocyclic group; and more preferably denotes a hydrogen atom or substituted or unsubstituted alkyl group.

$R^7$ desirably denotes a hydrogen atom, substituted or unsubstituted alkyl group, substituted or unsubstituted alkenyl group, substituted or unsubstituted aryl group, substituted or unsubstituted heterocyclic group, substituted or unsubstituted amino group, or substituted or unsubstituted acylamino group; and preferably denotes a hydrogen atom, substituted or unsubstituted alkyl group, substituted or unsubstituted aryl group, substituted or unsubstituted amino group, or substituted or unsubstituted acylamino group.

In desirable substituent combinations of the dye denoted by general formula (2), it is desirable for at least one of the various substituents to be one of the above desirable groups, preferable for more of the various substituents to be from among the above desirable groups, and more preferable for all of the substituents to be from among the above desirable groups.

The following combination is an example of a specific desirable combination: a combination in which $R^1$ denotes a hydrogen atom, $R^2$ denotes a hydrogen atom, $R^3$ denotes a substituted or unsubstituted alkyl group having 1 to 6 carbon atoms, $R^4$ denotes a substituted or unsubstituted alkyl group having 1 to 6 carbon atoms, $R^5$ denotes a substituted or unsubstituted alkyl group having 1 to 6 carbon atoms, $R^6$ denotes a substituted or unsubstituted alkyl group having 1 to 6 carbon atoms, $R^7$ denotes a substituted or unsubstituted dialkylamino group having 1 to 12 carbon atoms, $R^8$ denotes a substituted or unsubstituted alkoxycarbonyl group having 1 to 6 carbon atoms or a chlorine atom, n1 = 0 to 3, n2 = 0 to 3. The following combination is an example of a preferred combination: a combination in which $R^1$ denotes a hydrogen atom, $R^2$ denotes a hydrogen atom, $R^3$ denotes a substituted or unsubstituted alkyl group having 1 to 6

carbon atoms, $R^5$ denotes a substituted or unsubstituted alkyl group having 1 to 6 carbon atoms, $R^6$ denotes a substituted or unsubstituted alkyl group having 1 to 6 carbon atoms, $R^7$ denotes a substituted or unsubstituted dialkylamino group having 1 to 12 carbon atoms, n1 = 0, and n2 = 0.

Medium 2

Medium 2 comprises the dye denoted by the following general formula (3) in the visible information recording layer.

[Chem. 14]

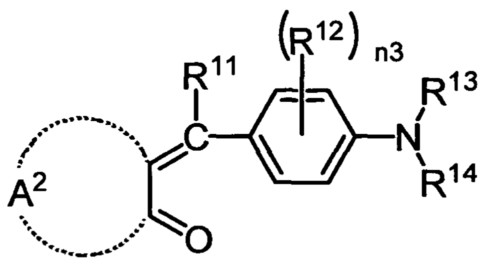

General formula (3)

In general formula (3), each of $R^{11}$, $R^{13}$, and $R^{14}$ independently denotes a hydrogen atom or a monovalent substituent, and $R^{12}$ denotes a monovalent substituent. Examples of the monovalent substituents are those described for $R^1$, $R^2$, and $R^3$ above. $A^2$ denotes an atom group forming a heterocyclic ring with carbon atoms bonded at either end. n3 denotes an integer ranging from 0 to 4.

$R^{11}$ is desirably identical to $R^1$ in general formula (1); is preferably a hydrogen atom or a substituted or unsubstituted alkyl group having 1 to 6 carbon atoms; and is more preferably a hydrogen atom.

$R^{12}$ is desirably identical to $R^4$ and $R^8$ in general formula (2); and is preferably a substituted or unsubstituted alkyl group having 1 to 6 carbon atoms, an alkoxy group having 1 to 6 carbon atoms, or a halogen atom.

Specific desirable examples of $R^{13}$ and $R^{14}$ are the substituents described for $R^3$ of general formula (1). Preferred examples are hydrogen atoms and substituted or unsubstituted alkyl groups having 1 to 6 carbon atoms.

The substituents described for $A^1$ in general formula (1) are examples of $A^2$. The same holds true for specific desirable examples.

In desirable substituent combinations of the dye denoted by general formula (3), it is desirable for at least one of the various substituents to be one of the above desirable groups, preferable for more of the various substituents to be from among the above desirable groups, and more preferable for all of the substituents to be from among the above desirable groups.

The following combination is an example of a specific desirable combination: a combination in which $A^2$ denotes 2-pyrazoline-5-one comprising a substituent, $R^{11}$ denotes a hydrogen atom, $R^{12}$ denotes a substituted or unsubstituted alkyl group having 1 to 6 carbon atoms or a substituted or unsubstituted alkoxy group having 1 to 6 carbon atoms, $R^{13}$ denotes a substituted or unsubstituted alkyl group having 1 to 6 carbon atoms, $R^{14}$ denotes a substituted or unsubstituted alkyl group having 1 to 6 carbon atoms, and n3 = 0 to 2. The following combination is an example of a preferred combination: a combination in which $A^2$ denotes 2-pyrazoline-5-one comprising a substituent, $R^{11}$ denotes a hydrogen atom, $R^{12}$ denotes a substituted or unsubstituted alkyl group having 1 to 6 carbon atoms or a substituted or unsubstituted alkoxy group having 1 to 6 carbon atoms, $R^{13}$ denotes a substituted or unsubstituted alkyl group having 1 to 6 carbon atoms, $R^{14}$ denotes a substituted or unsubstituted alkyl group having 1 to 6 carbon atoms, and n3 = 0 or 1.

Medium 3

Medium 3 comprises the dye denoted by the following general formula (4) in the visible information recording layer.

[Chem. 15]

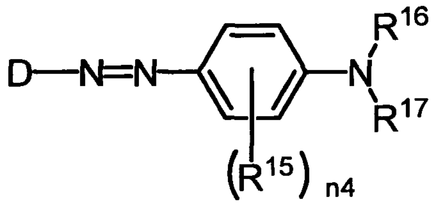

General formula (4)

In general formula (4), D denotes a diazonium salt-derived arocyclic group or aromatic heterocyclic group; each of $R^{16}$ and $R^{17}$ independently denotes a hydrogen atom or a monovalent substituent; and $R^{15}$ denotes a monovalent substituent. Examples of the monovalent substituent are those described for $R^1$, $R^2$, and $R^3$ above. n4 denotes an integer ranging from 0 to 4.

D denotes a diazonium salt-derived, substituted or unsubstituted arocyclic group or substituted or unsubstituted aromatic heterocyclic group. That is, D is a diazo component. The term "diazo component" means a partial structure that can be incorporated by converting a heterocyclic compound or a benzene derivative having a substituent in the form of an amino group into a diazo compound (diazonium salt) and causing it to undergo a diazo coupling reaction with a coupler. This is a concept that is frequently employed in the field of azo dyes. In other words, it is a substituent in the form of a heterocyclic compound substituted with an amino group capable of undergoing a diazo conversion reaction, or a benzene derivative, that has been converted to a monovalent group by removing the amino group.

Examples of the aromatic heterocyclic group, irrespective of substitution position, are pyrrole, pyrazole, triazole, thiazole, isothiazole, benzothiazole, 1,3,4-thiadiazole, 1,2,4-thiadiazole, oxazole, benzooxazole, imidazole, benzoisothiazole, thiophene, benzothiophene, pyridine, pyridazine, pyrimidine, pyrazine, indole, quinoline, purine, carbazole, and acrylidine rings. Desirable examples are monovalent groups derived from isothiazole, 1,3,4-thiadiazole, and 1,2,4-thiadiazole rings. The various heterocyclic rings may further comprise substituents, and may be condensed.

D desirably denotes the group described in the following group (1) of heterocyclic groups.

[Chem. 16]

Group (1) of heterocyclic groups:

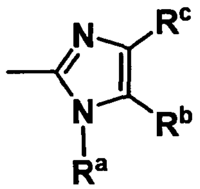
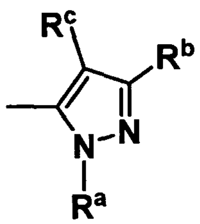
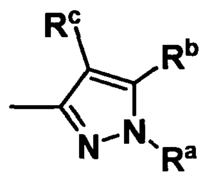
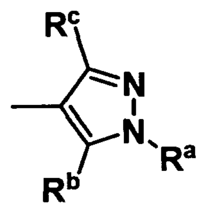
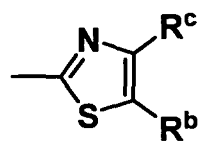
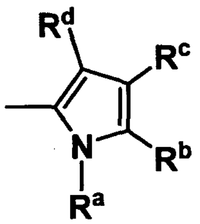
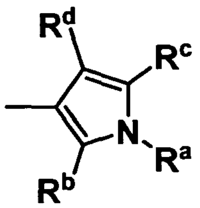
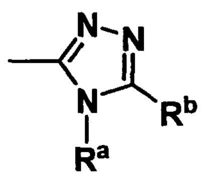
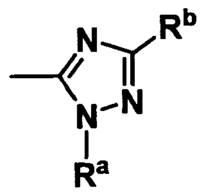
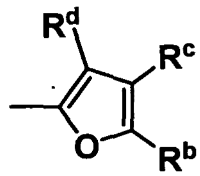
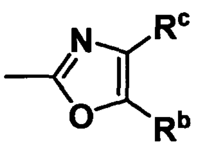
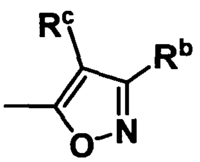
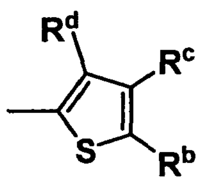
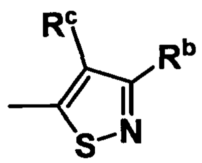
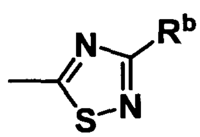
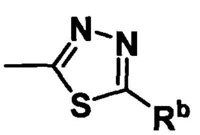
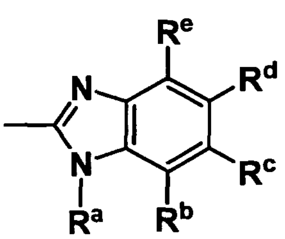
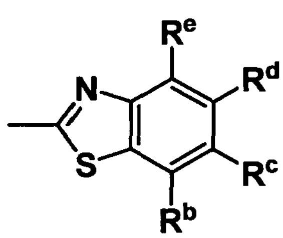
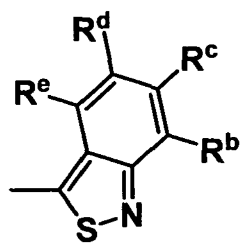

In above group (1) of heterocyclic groups, each of $R^a$, $R^b$, $R^c$, $R^d$, and $R^e$ independently denotes a hydrogen atom or a monovalent substituent. Examples of the monovalent substituent are identical to the substituents given by way of example as substituents for $R^1$, $R^2$, and $R^3$.

D preferably denotes the group selected from the following group (2) of heterocyclic groups.

[Chem. 17]

Group (2) of heterocyclic groups:

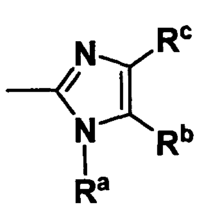
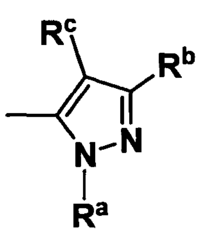
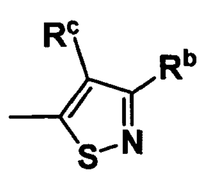
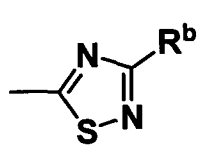
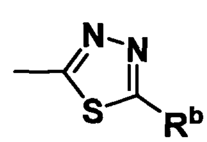

In each group in the above group (2) of heterocyclic groups, $R^a$, $R^b$, and $R^c$ are defined as $R^a$, $R^b$, and $R^c$ in each group in the above group (1) of heterocyclic groups, and the desirable substituents are identical thereto.

In the various groups in above groups (1) and (2) of heterocyclic groups, $R^a$ desirably denotes a hydrogen atom, or substituted or unsubstituted alkyl group, substituted or unsubstituted aryl group, substituted or unsubstituted heterocyclic group; and preferably denotes a substituted or unsubstituted alkyl group or substituted or unsubstituted aryl group. Each of $R^b$, $R^c$, $R^d$, and $R^e$ desirably independently denotes a hydrogen atom, substituted or unsubstituted alkyl group, substituted or unsubstituted alkenyl group, substituted or unsubstituted aryl group, substituted or unsubstituted heterocyclic group, substituted or unsubstituted acyl group, cyano group, carbamoyl group, or alkoxycarbonyl group; and more preferably denotes a hydrogen atom, substituted or unsubstituted alkyl group, substituted or unsubstituted aryl group, substituted or unsubstituted heterocyclic group, or cyano group.

In general formula (4), $R^{15}$ is desirably identical to $R^4$ in general formula (1); preferably denotes an alkyl group, alkoxy group, amino group, acylamino group, aminocarbonylamino group, alkoxycarbonylamino group, aryloxycarbonylamino group, sulfamoylamino group, or alkyl or arylsulfonylamino group.

Desirable examples of $R^{16}$ and $R^{17}$ are the substituents described for $R^3$ in general formula (1), with hydrogen atoms or substituted or unsubstituted alkyl groups having 1 to 6 carbon atoms being preferred.

In combinations of desirable substituents of the dye denoted by general formula (4), it is desirable for at least one of the various substituents to be one of the above desirable groups, preferable for more of the various substituents to be from among the above desirable groups, and more preferable for all of the substituents to be from among the above desirable groups.

The following combination is an example of a specific desirable combination: a combination in which D denotes a monovalent group derived from an isothiazole ring comprising a substituent or a monovalent group derived from a 1,3,4-thiadiazole ring comprising a substituent; $R^{15}$ denotes an acylamino group; $R^{16}$ denotes a substituted or unsubstituted alkyl group having 1 to 6 carbon atoms; $R^{17}$ denotes a substituted or unsubstituted alkyl group having 1 to 6 carbon atoms; and n4 = 0 to 4. The following combination is an example of a preferred combination: a combination in which D denotes a monovalent group derived from an isothiazole ring comprising a substituent or a monovalent group derived from a 1,3,4-thiadiazole ring comprising a substituent, $R^{15}$ denotes an acylamino group, $R^{16}$ denotes a substituted or unsubstituted alkyl group having 1 to 6 carbon atoms, $R^{17}$ denotes a substituted or unsubstituted alkyl group having 1 to 6 carbon atoms, n4 = 1, with the substitution position of $R^{15}$ being the o-position relative to the azo group.

Medium 4

Medium 4 comprises the dye denoted by the following general formula (5) in the visible information recording layer.

[Chem. 18]

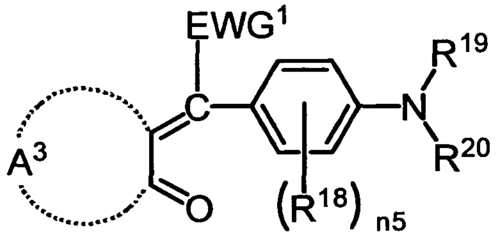

General formula (5)

In general formula (5), $A^3$ denotes an atom group forming a heterocyclic ring with carbon atoms bonded at either end, $EWG^1$ denotes an electron-withdrawing group, $R^{18}$ denotes a monovalent substituent, and each of $R^{19}$ and $R^{20}$ independently denotes a hydrogen atom or a monovalent substituent. Examples of the monovalent substituent are those given in the description of $R^1$, $R^2$, and $R^3$ above. n5 denotes an integer ranging from 0 to 4.

The substituents described for $A^1$ in general formula (1) are specific examples of $A^3$. The same applies for desirable specific examples.

$EWG^1$ denotes an electron-withdrawing group with a Hammett substituent constant $\sigma_p$ value of equal to or greater than 0. $EWG^1$ desirably denotes an electron-withdrawing group with a $\sigma_p$ value of equal to or greater than 0.30, preferably an electron-withdrawing group with a $\sigma_p$ value of equal to or greater than 0.45, and more preferably, an electron-withdrawing group with a $\sigma_p$ value of equal to or greater than 0.60. Examples of electron-withdrawing groups with $\sigma_p$ values of equal to or greater than 0.60 are: nitro, cyano, methanesulfonyl, trifluoromethanesulfonyl, trifluoroacetyl, dimethylaminosulfonyl, and sulfamoyl groups. Examples of electron-withdrawing groups with $\sigma_p$ values of equal to or greater than 0.45 are: alkoxycarbonyl, acyl, and carboxy groups. Examples of electron-withdrawing groups with $\sigma_p$ values of equal to or greater than 0.30 are sulfo and carbamoyl groups. Cyano, carboxyl, alkoxycarbonyl, and carbamoyl groups are preferred. Cyano, alkoxycarbonyl, and carbamoyl groups are of greater preference. And cyano and carbamoyl

groups are the groups of greatest preference.

A brief description will be given of the value of Hammett's substituent constant $\sigma_p$. The validity of the Hammett's equation, an empirical equation proposed by L. P. Hammett in 1935 for quantitatively stating the effect of a substituent on the equilibrium or reaction of a benzene derivative, is widely recognized today. The values of the substituent constants $\sigma_p$ and $\sigma_m$ are calculated using the Hammett's equation. These values can be seen in many common treatises, and are described in detail in J.A. Dean, ed., Lange's Handbook of Chemistry, 12th Ed., 1979 (McGraw-Hill) and The Domain of Chemistry, Supplemental Edition No. 122, pp. 96-103, 1979 (Nankodo), for example. The contents thereof are expressly incorporated herein by reference in their entirety. In the present specification, the various substituents are limited or described by Hammett's substituent constant $\sigma_p$. However, this does not mean that they are limited to substituents for which values exist in the literature and can be found in the above-cited treatises; when the value has not been given in the literature, but has been determined based on Hammett's equation, substituents included within the given range are covered. The above general formulas include compounds that are not benzene derivatives; however, the value of $\sigma_p$ is employed irrespective of substitution position as a measure of the electron activity of a substituent. The $\sigma_p$ value is employed with this meaning in the present specification.

Desirable examples of $R^{18}$ are the substituents described for $R^4$ and $R^8$ in general formula (2). Alkyl groups having 1 to 6 carbon atoms and alkoxy groups having 1 to 6 carbon atoms are preferred.

Desirable examples of $R^{19}$ and $R^{20}$ are the substituents described for $R^3$ in general formula (1). Each preferably independently denotes a hydrogen atom, substituted or unsubstituted alkyl group, substituted or unsubstituted aryl group, or substituted or unsubstituted heterocyclic group, and more preferably denotes a hydrogen atom or substituted or unsubstituted alkyl group.

In desirable substituent combinations of the dye denoted by general formula (5), it is desirable for at least one of the various substituents to be one of the above desirable groups, preferable for more of the various substituents to be from among the above desirable groups, and more preferable for all of the substituents to be from among the above desirable groups.

The following combination is an example of a specific desirable combination: a combination in which $A^3$ denotes 2-pyrazoline-5-one comprising a substituent, $EWG^1$ denotes a cyano group, $R^{18}$ denotes a substituted or unsubstituted alkyl group having 1 to 6 carbon atoms or a substituted or unsubstituted alkoxy group having 1 to 6 carbon atoms, $R^{19}$ denotes a substituted or unsubstituted alkyl group having 1 to 6 carbon atoms, $R^{20}$ denotes a substituted or unsubstituted alkyl group having 1 to 6 carbon atoms, and n5 = 0 to 4. The following combination is an example of a preferred combination: a combination in which $A^3$ denotes 2-pyrazoline-5-one comprising a substituent, $EWG^1$ denotes a cyano group, $R^{19}$ denotes a substituted or unsubstituted alkyl group having 1 to 6 carbon atoms, $R^{20}$ denotes a substituted or unsubstituted alkyl group having 1 to 6 carbon atoms, and n5 = 0.

Medium 5

Medium 5 comprises the dye denoted by the following general formula (6) in the visible information recording layer.

[Chem. 19]

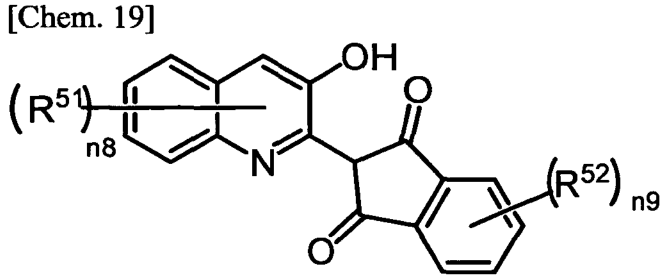

General formula (6)

In general formula (6), each of $R^{51}$ and $R^{52}$ independently denotes a monovalent substituent. Examples of the monovalent substituent are those described for $R^1$, $R^2$, and $R^3$ above. n8 denotes an integer ranging from 0 to 5, and n9 denotes an integer ranging from 0 to 4.

Examples of $R^{51}$ are the substituents described for $R^4$ and $R^8$ in general formula (2). A hydrogen atom or an alkyl group having 1 to 6 carbon atoms is preferred, with an alkyl group having 1 to 6 carbon atoms being of greater preference.

Examples of $R^{52}$ are the substituents described for $R^4$ and $R^8$ in general formula (2). Aryloxycarbonyl groups having 6 to 10 carbon atoms, alkoxycarbonyl groups having 1 to 6 carbon atoms, and substituted and unsubstituted

carbamoyl groups are desirable, with substituted carbamoyl groups being preferred.

In desirable substituent combinations of the dye denoted by general formula (6), it is desirable for at least one of the various substituents to be one of the above desirable groups, preferable for more of the various substituents to be from among the above desirable groups, and more preferable for all of the substituents to be from among the above desirable groups.

The following combination is an example of a specific desirable combination: a combination in which $R^{51}$ denotes an alkyl group having 1 to 6 carbon atoms; $R^{52}$ denotes a substituted or unsubstituted carbamoyl group or aryloxycarbonyl group having 6 to 10 carbon atoms or alkoxycarbonyl group having 1 to 6 carbon atoms; n8 = 0 to 3, and n9 = 0 to 3. The following combination is an example of a preferred combination: a combination in which $R^{51}$ denotes an alkyl group having 1 to 6 carbon atoms; $R^{52}$ denotes a substituted or unsubstituted carbamoyl group or aryloxycarbonyl group having 6 to 10 carbon atoms or alkoxycarbonyl group having 1 to 6 carbon atoms; n8 = 0 to 2; and n9 = 0 to 2. The following combination is an example of a combination of greater preference: a combination in which $R^{51}$ denotes an alkyl group having 1 to 6 carbon atoms; $R^{52}$ denotes a substituted or unsubstituted carbamoyl group or aryloxycarbonyl group having 6 to 10 carbon atoms or alkoxycarbonyl group having 1 to 6 carbon atoms; n8 = 0 to 1; and n9 = 0 to 2.

Medium 6

Medium 6 comprises the dye denoted by the following general formula (7) in the visible information recording layer.

[Chem. 20]

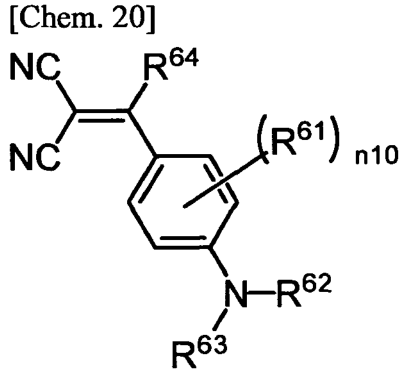

General formula (7)

In general formula (7), $R^{64}$ denotes a hydrogen atom or a monovalent substituent, and $R^{61}$ denotes a monovalent substituent. Examples of these monovalent substituents are those described for $R^1$, $R^2$, and $R^3$ above. Each of $R^{63}$ and $R^{62}$ independently denotes a hydrogen atom, substituted or unsubstituted alkyl group, substituted or unsubstituted aryl group, or substituted or unsubstituted heterocyclic group. n10 denotes an integer ranging from 0 to 4.

Examples of $R^{64}$ are the substituents described for $R^1$ and $R^2$ in general formula (1); the same holds true for desirable examples. A hydrogen atom or alkyl group having 1 to 6 carbon atoms is preferred, with a hydrogen atom being of greater preference.

Examples of $R^{61}$ are the substituents described for $R^4$ and $R^8$ in general equation (2); the same holds true for desirable examples. An alkyl group having 1 to 6 carbon atoms is preferred, and an alkyl group having 1 to 6 carbon atoms is of greater preference.

Examples of $R^{62}$ and $R^{63}$ are the substituents described for $R^3$ in general formula (1); the same holds true for desirable examples. A hydrogen atom or a substituted or unsubstituted alkyl group having 1 to 6 carbon atoms is preferred.

In desirable substituent combinations of the dye denoted by general formula (7), it is desirable for at least one of the various substituents to be one of the above desirable groups, preferable for more of the various substituents to be from among the above desirable groups, and more preferable for all of the substituents to be from among the above desirable groups.

The following combination is an example of a specific desirable combination: a combination in which $R^{61}$ denotes a substituted or unsubstituted alkyl group having 1 to 6 carbon atoms; $R^{62}$ denotes a substituted or unsubstituted alkyl group having 1 to 6 carbon atoms; $R^{63}$ denotes a substituted or unsubstituted alkyl group having 1 to 6 carbon atoms; $R^{64}$ denotes a hydrogen atom; and n10 = 0 to 4. The following combination is an example of a preferred combination: a combination in which $R^{61}$ denotes a substituted or unsubstituted alkyl group having 1 to 6 carbon atoms; $R^{62}$ denotes a substituted or unsubstituted alkyl group having 1 to 6 carbon atoms; $R^{63}$ denotes a substituted or unsubstituted alkyl group having 1 to 6 carbon atoms; $R^{64}$ denotes a hydrogen atom; and n10 = 0 to 1.

Medium 7

Medium 7 comprises the dye denoted by the following general formula (8) in the visible information recording layer.

[Chem. 21]

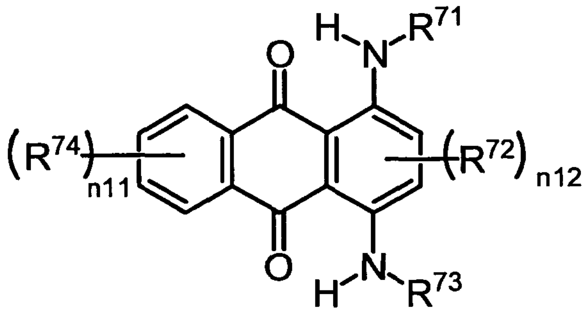

General formula (8)

In general formula (8), each of $R^{71}$ and $R^{73}$ independently denotes a hydrogen atom or a monovalent substituent. Each of $R^{72}$ and $R^{74}$ independently denotes a monovalent substituent. Examples of these monovalent substituents are the substituents described for $R^1$, $R^2$, and $R^3$ above. n11 denotes an integer ranging from 0 to 4 and n12 denotes an integer ranging from 0 to 2.

Examples of $R^{71}$ and $R^{73}$ are the substituents described for $R^3$ in general formula (1); the same holds true for desirable examples. A hydrogen atom or substituted or unsubstituted alkyl group having 1 to 6 carbon atoms is preferred, with a hydrogen atom being of greater preference.

Examples of $R^{72}$ and $R^{74}$ are the substituents described for $R^4$ and $R^8$ in general formula (2). Alkoxy groups, aryloxy groups, acyloxy groups, carbamoyloxy groups, alkoxycarbonyloxy groups, and aryloxycarbonyloxy groups are desirable, and alkoxy groups and aryloxy groups are preferred. Each group may comprise substituents.

In desirable substituent combinations of the dye denoted by general formula (8), it is desirable for at least one of the various substituents to be one of the above desirable groups, preferable for more of the various substituents to be from among the above desirable groups, and more preferable for all of the substituents to be from among the above desirable groups.

The following combination is an example of a specific desirable combination in general formula (8): a combination in which $R^{71}$ denotes a hydrogen atom; $R^{72}$ denotes a substituted or unsubstituted aryloxy group having 6 to 12 carbon atoms; $R^{73}$ denotes a hydrogen atom; n11 = 0; and n12 = 0 to 2. The following combination is an example of a preferred combination: a combination in which $R^{71}$ denotes a hydrogen atom; $R^{72}$ denotes a substituted or unsubstituted aryloxy group having 6 to 12 carbon atoms; $R^{73}$ denotes a hydrogen atom; n11 = 0; and n12 = 2.

Medium 8

Medium 8 comprises the dye denoted by the following general formula (9) in the visible information recording layer.

[Chem. 22]

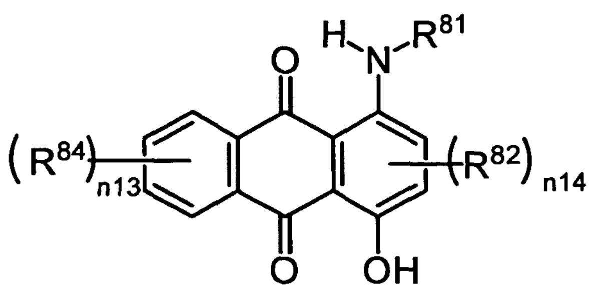

General formula (9)

In general formula (9), $R^{81}$ denotes a hydrogen atom or a monovalent substituent, and each of $R^{82}$ and $R^{84}$

independently denotes a monovalent substituent. Examples of these monovalent substituents are those described for $R^1$, $R^2$, and $R^3$ above. n13 denotes an integer ranging from 0 to 4 and n14 denotes an integer ranging from 0 to 2.

Examples of $R^{81}$ are the substituents described for $R^3$ in general formula (1); the same holds true for desirable examples. A hydrogen atom or substituted or unsubstituted alkyl group having 1 to 6 carbon atoms is preferred, and a hydrogen atom is of greater preference.

Examples of $R^{82}$ and $R^{84}$ are the substituents described for $R^4$ and $R^8$ in general formula (2). Alkoxy groups, aryloxy groups, acyloxy groups, carbamoyloxy groups, alkoxycarbonyloxy groups, and aryloxycarbonyloxy groups are preferred, and alkoxy and aryloxy groups are of greater preference. Each group may comprise substituents.

In desirable substituent combinations of the dye denoted by general formula (9), it is desirable for at least one of the various substituents to be one of the above desirable groups, preferable for more of the various substituents to be from among the above desirable groups, and more preferable for all of the substituents to be from among the above desirable groups.

The following combination is an example of a specific desirable combination in general formula (9): a combination in which $R^{81}$ denotes a hydrogen atom; $R^{82}$ denotes an aryloxy group, n13 = 0, and n14 = 1 to 2. The following combination is an example of a preferred combination: a combination in which $R^{81}$ denotes a hydrogen atom, $R^{82}$ denotes an aryloxy group, n13 = 1, and n14 = 0. The following combination is an example of a combination of greater preference: a combination in which $R^{81}$ denotes a hydrogen atom, $R^{82}$ denotes an aryloxy group, n13 = 0, and n14 = 1, with $R^{82}$ being substituted at the o-position relative to the amino group.

Medium 9

Medium 9 comprises the dye denoted by the following general formula (10) in the visible information recording layer.

[Chem. 23]

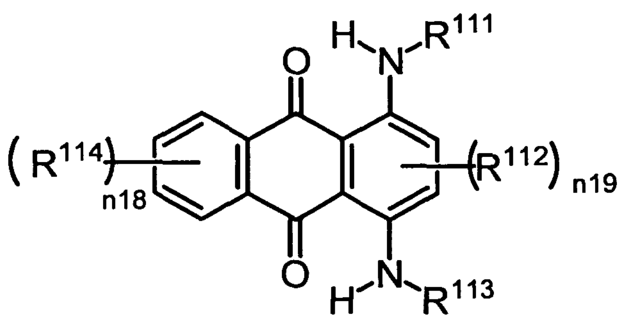

General formula (10)

In general formula (10), each of $R^{111}$ and $R^{113}$. independently denotes a hydrogen atom or a monovalent substituent, each of $R^{112}$ and $R^{114}$ independently denotes a monovalent substituent, n18 denotes an integer ranging from 0 to 4, and n19 denotes an integer ranging from 0 to 2. Examples of these monovalent substituents are those described for $R^1$, $R^2$, and $R^3$ above.

Examples of $R^{111}$ and $R^{113}$ are the substituents described for $R^3$ in general formula (1); the same holds true for desirable examples. Hydrogen atoms, substituted or unsubstituted alkyl groups having 1 to 6 carbon atoms, and substituted or unsubstituted aryl groups are preferred.

Examples of $R^{112}$ and $R^{114}$ are the substituents described for $R^4$ and $R^8$ in general formula (2); the same holds true for desirable examples.

In desirable substituent combinations of the dye denoted by general formula (10), it is desirable for at least one of the various substituents to be one of the above desirable groups, preferable for more of the various substituents to be from among the above desirable groups, and more preferable for all of the substituents to be from among the above desirable groups.

The following combination is an example of a specific desirable combination: a combination in which $R^{111}$ denotes a substituted or unsubstituted alkyl group having 1 to 6 carbon atoms or a substituted or unsubstituted aryl group having 6 to 10 carbon atoms; $R^{113}$ denotes a substituted or unsubstituted alkyl group having 1 to 6 carbon atoms or a substituted or unsubstituted aryl group having 6 to 10 carbon atoms; n18 = 0; and n19 = 0. The following combination is an example of a preferred combination: a combination in which $R^{111}$ denotes a substituted or unsubstituted alkyl group having 1 to 6 carbon atoms; $R^{113}$ denotes a substituted or unsubstituted aryl group having 6 to 10 carbon atoms; n18 = 0; and n19 = 0.

Examples of the substituent when the various above-described substituents are substituted are the monovalent

substituents described for $R^1$, $R^2$, and $R^3$ above.

Specific examples of the dyes denoted by the above general formulas (1) to (10) are given below. However, the dyes employed in the present invention are not limited to the following examples.

[Chem. 24]

(1)-1

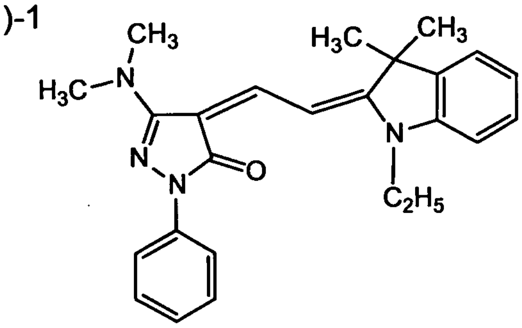

(1)-2

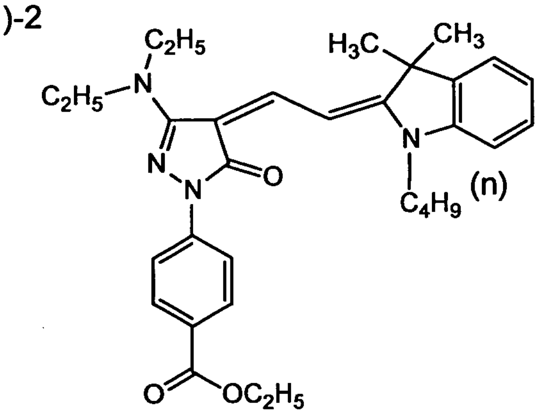

(1)-3

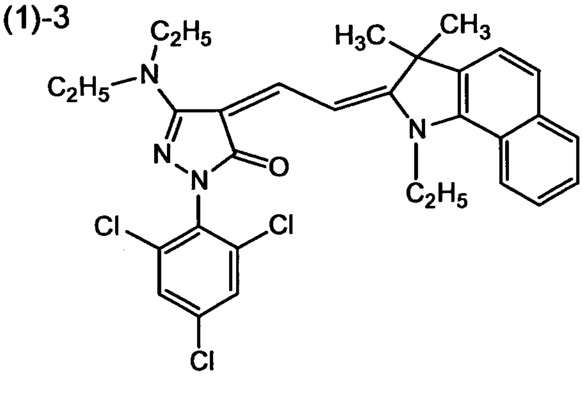

[Chem. 25]

(3)-1

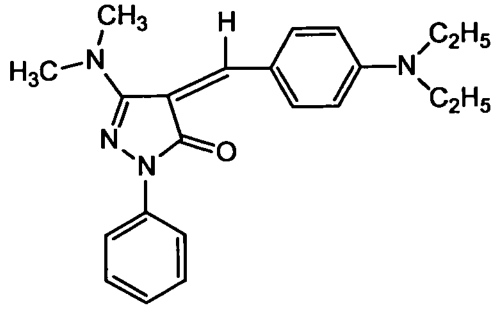

(3)-2

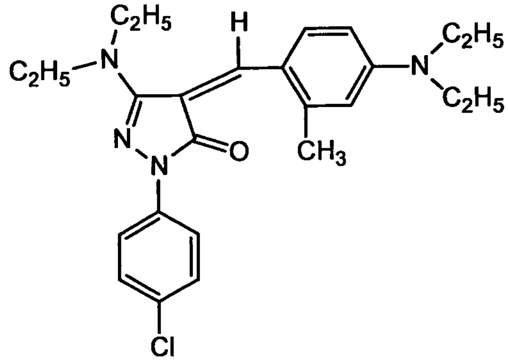

(3)-3

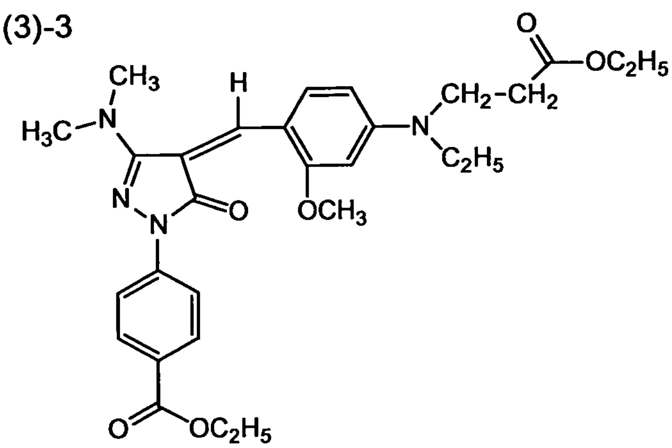

[Chem. 26]

(4)-1

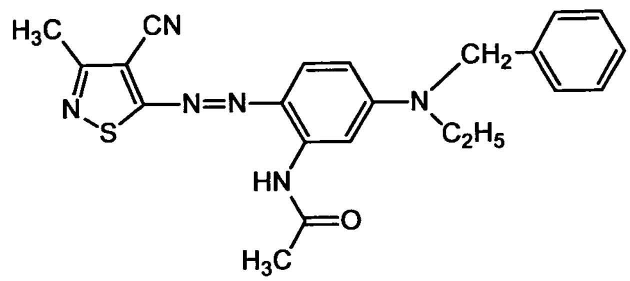

(4)-2

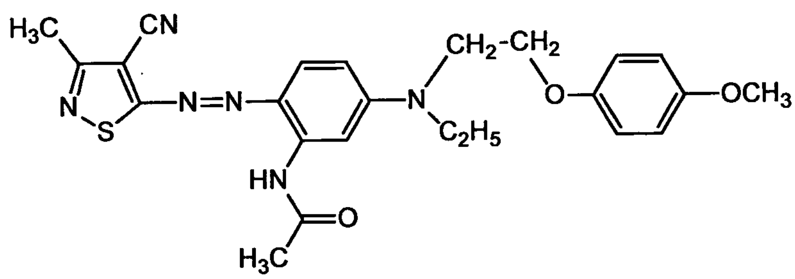

(4)-3

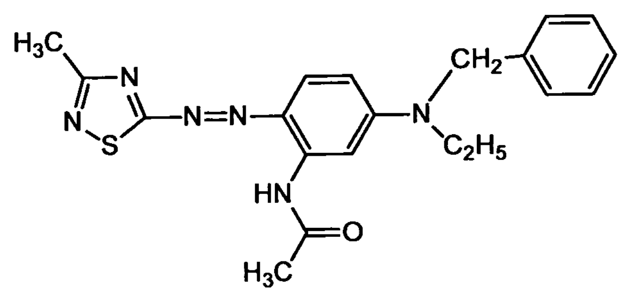

(4)-4

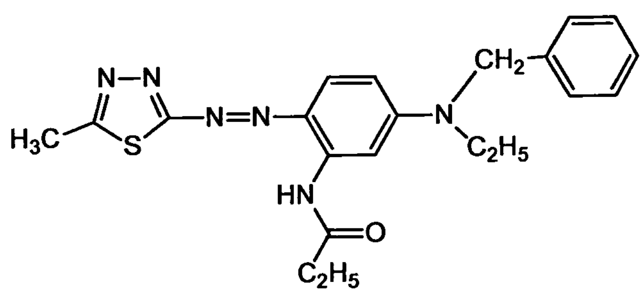

[Chem. 27]

(4-5)

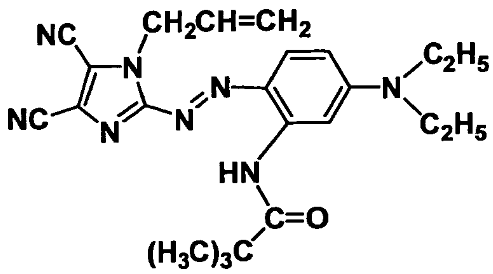

(4-6)

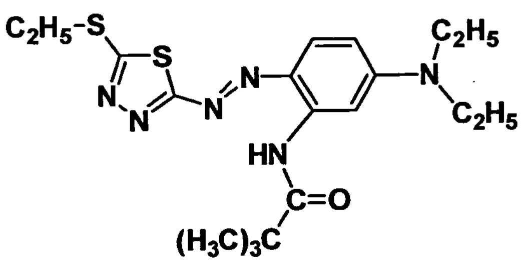

(4-7)

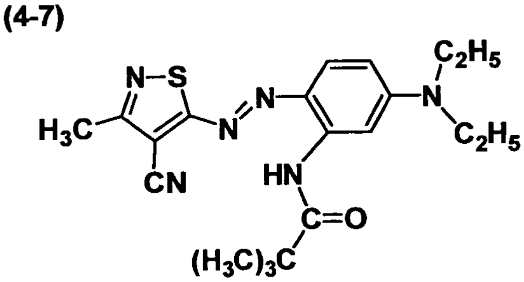

(4-8)

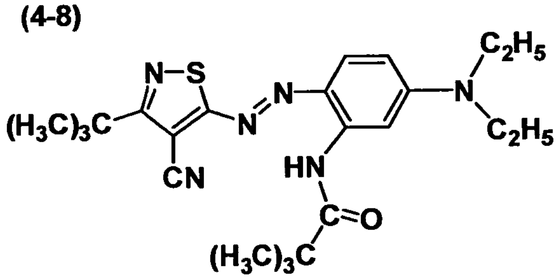

(4-9)

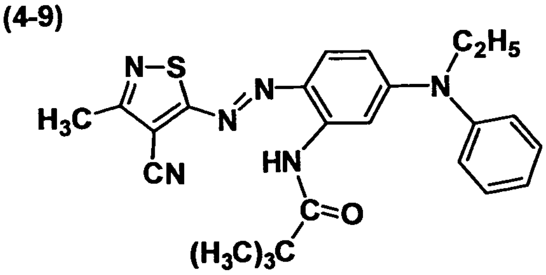

(4-10)

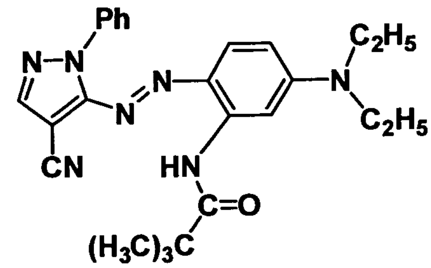

(4-11)

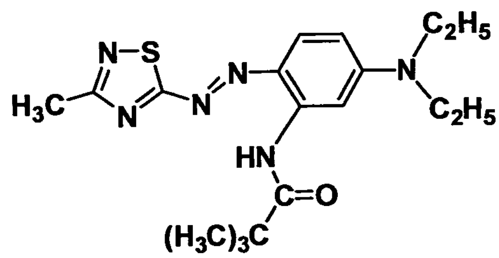

(4-12)

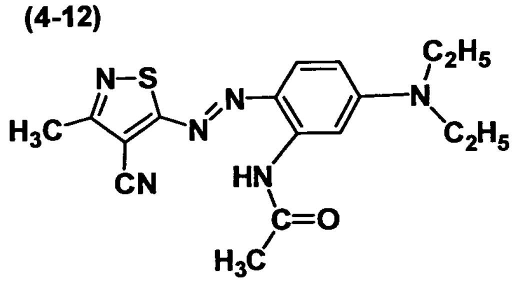

(4-13)

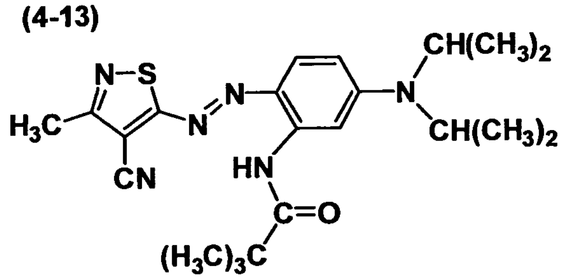

(4-14)

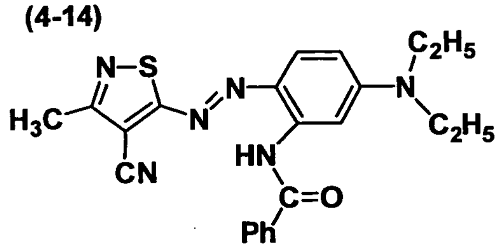

[Chem. 28]

(5)-1

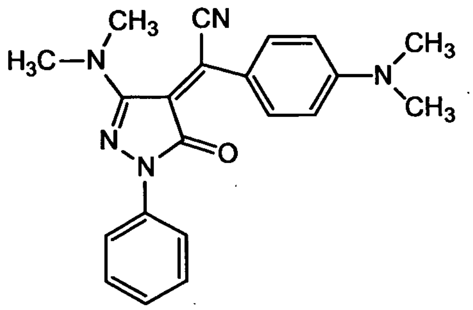

(5)-2

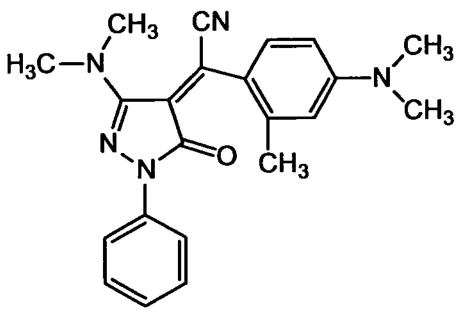

(5)-3

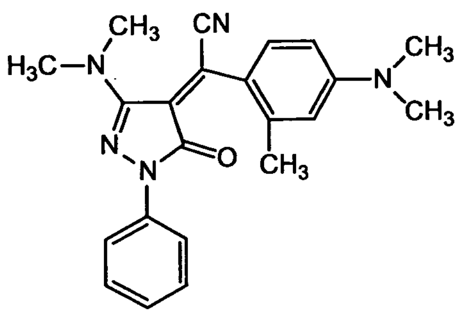

(5)-4

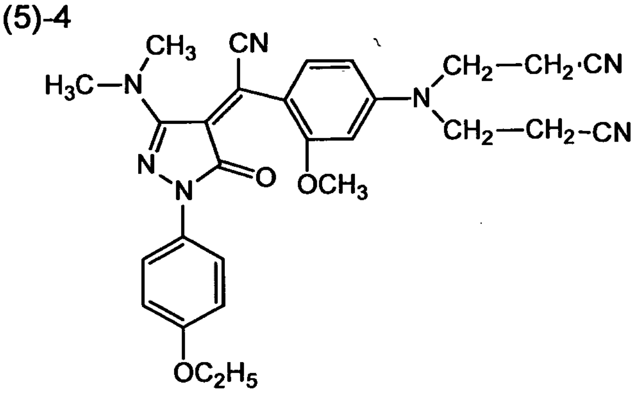

[Chem. 29]

(6)-1

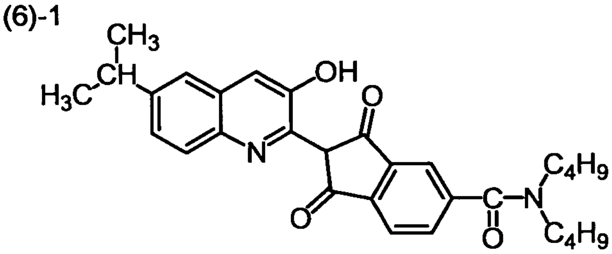

(6)-2

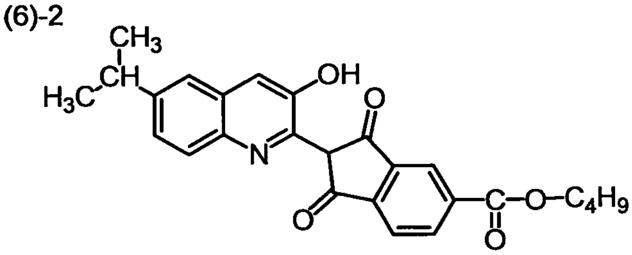

(6)-3

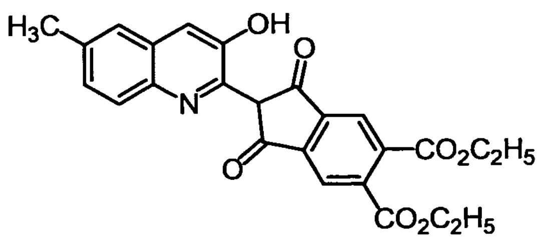

[Chem. 30]

(7)-1

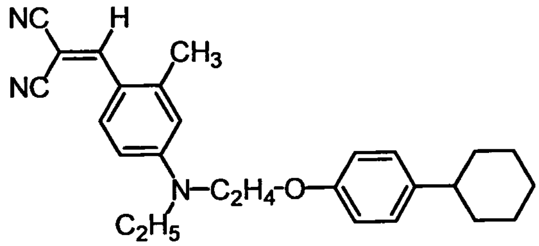

(7)-2

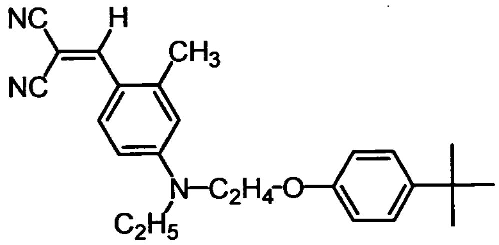

(7)-3

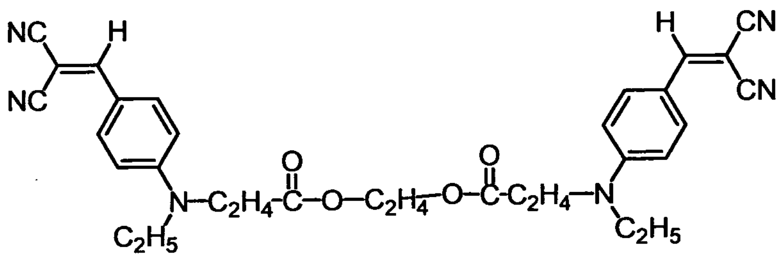

[Chem. 31]

(8)-1

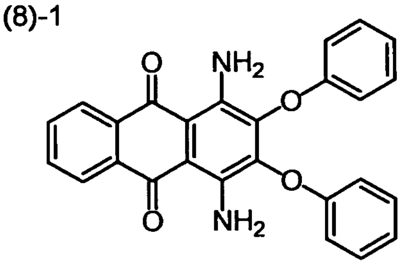

(9)-1

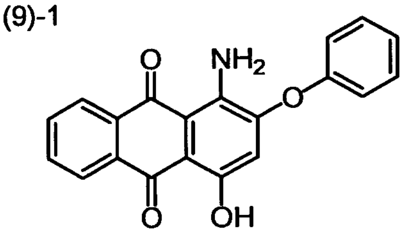

(8)-2

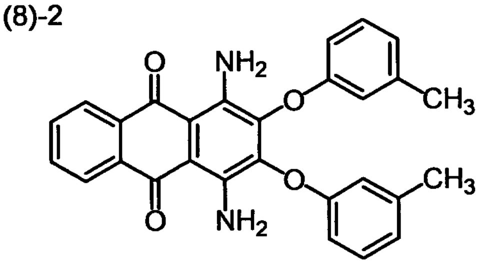

(9)-2

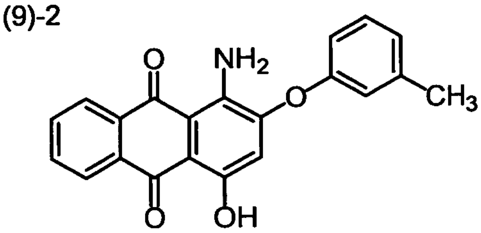

[Chem. 32]

(10)-1

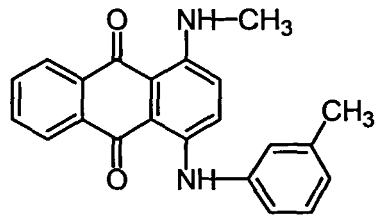

(10)-2

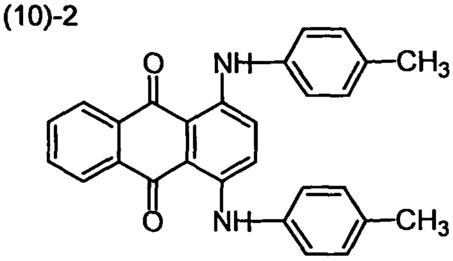

(10)-3

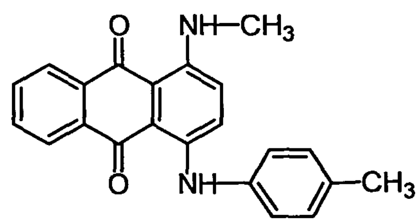

Some of the dyes denoted by general formulas (1) to (10) are available as commercial products. Those that are not commercially available can be synthesized in accordance with the methods described in the following literature: US Application Ser. No. 07/059,442; Specifications of US Patent No. 3,770,370, Japanese Unexamined Patent Publication (KOKAI) No. 2004-51873, German Patent No. 2,316,755, Japanese Unexamined Patent Publication (KOKAI) Heisei No. 7-137455; Japanese Unexamined Patent Publication (KOKAI) Showa No. 61-31292; J. Chem. Soc. Perkin Transfer I, 1977, 2047; and Chapman, Merocyanine Dye-Donor Element Used in Thermal Dye Transfer. The contents thereof are expressly incorporated herein by reference in their entirety.

<Visible information recording medium>

The optical recording media 1 to 9 of the present invention contain the various dyes in a visible recording layer. In the present invention, it is possible to employ the individual dyes singly, or in combinations of two or more. The dyes denoted by general formulas (1), (2), (3), (6), and (7) are yellow dyes. The dyes denoted by general formulas (4), (5), (8), and (9) are magenta dyes. And the dye denoted by general formula (10) is a cyan dye. In the present invention, suitable dyes can be combined for use as needed based on a desired tone. The various above dyes can absorb the laser beam that is irradiated, resulting in photo-thermal conversion. The heat that is generated can degrade the dye, reducing absorption of light in the visible light region. Thus, a difference in tone can be produced relative to regions in which color is exhibited by undegraded dye, thereby making it possible to form visible information such as an image in the visible information recording layer.

Each of the above dyes desirably has absorbance of equal to or greater than 0.01 (desirably 0.1 to 1.0) for a laser beam in the wavelength region of 400 to 850 nm. The above absorbance of the dye contained in the visible information recording layer can permit the recording with good clarity of visible information such as text, images, and

patterns by irradiation with a laser beam.

The visible information recording layer can contain dyes other than the above dyes. The dyes that are employed in combination can be suitably selected based on the desired tone. Examples of dyes that are desirable for forming images with good clarity and high contrast are the cyanine dyes of general formula (I) below.

[Chem. 33]

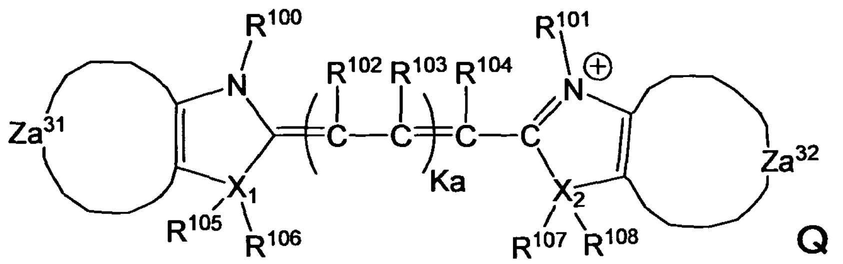

General formula (I)

In general formula (I), each of $Za^{31}$ and $Za^{32}$ independently denotes an atom group forming a carbon ring or heterocyclic ring.

A substituted or unsubstituted six-membered aromatic ring is desirable as the carbon ring that is formed. The aromatic ring may be substituted with substituents. Examples of the substituents are the substituents given by way of example for $R^1$, $R^2$, and $R^3$ in general formula (1). Specific examples of carbon rings are substituted or unsubstituted benzene rings and substituted or unsubstituted naphthalene rings. Benzene rings are desirable.

A substituted or unsubstituted six-membered aromatic heterocyclic ring is desirable as the heterocyclic ring that is formed. Examples of substituents are those given by way of example for $R^1$, $R^2$, and $R^3$ in general formula (1). A substituted or unsubstituted pyridine ring is desirable as a heterocyclic ring.

The ring structure formed by $Za^{31}$ and $Za^{32}$ is more desirably a carbon ring than a heterocyclic ring.

Each of $R^{100}$ and $R^{101}$ independently denotes a hydrogen atom or a monovalent substituent. Examples of monovalent substituents denoted by $R^{100}$ and $R^{101}$ are those described above for $R^1$, $R^2$, and $R^3$ in general formula (1). $R^{100}$ and $R^{101}$ desirably denote linear or branched, substituted or unsubstituted alkyl groups. The alkyl groups desirably have 1 to 10, preferably 2 to 5, carbon atoms.

Each of $R^{102}$, $R^{103}$, $R^{104}$, $R^{105}$, $R^{106}$, $R^{107}$, and $R^{108}$ independently denotes a hydrogen atom or a monovalent substituent. Examples of these monovalent substituents are those set forth above for $R^1$, $R^2$, and $R^3$ in general formula (1). $R^{102}$, $R^{103}$, and $R^{104}$ desirably denote hydrogen atoms or alkyl groups having 1 to 6 carbon atoms; preferably denote hydrogen atoms or alkyl groups having 1 to 4 carbon atoms; and more preferably denote hydrogen atoms.

$R^{105}$, $R^{106}$, $R^{107}$, and $R^{108}$ desirably denote linear or branched substituted or unsubstituted alkyl groups. The alkyl groups desirably have 1 to 6, preferably 1 to 4, carbon atoms.

Each of $X_1$ and $X_2$ independently denotes a carbon atom or a hetero atom. Examples of the hetero atom are nitrogen, sulfur, and oxygen atoms. Oxygen and sulfur atoms are desirable, and sulfur atoms are preferred. $X_1$ and $X_2$ more desirably denote carbon atoms than hetero atoms.

Ka denotes 2 or 3, desirably 2. The plural $R^{102}$s and $R^{103}$s that are present may be identical or different.

Q denotes a monovalent anion. Examples of monovalent anions are halogen ions and perchloric acid ions. Halogen ions are desirable.

Specific examples of cyanine dyes denoted by general formula (I) are given below. However, the present invention is not limited to the specific examples given below.

[Chem. 34]

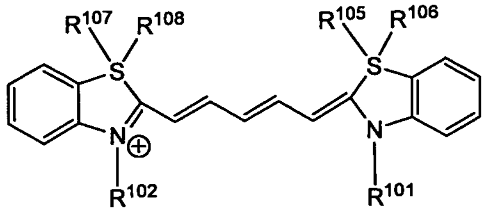 Q

| | $R^{100}$ | $R^{101}$ | $R^{105}$ | $R^{106}$ | $R^{107}$ | $R^{108}$ | Q |
|---|---|---|---|---|---|---|---|
| C-25 | $-C_4H_9$ | $-C_2H_5$ | $-CH_3$ | $-C_2H_5$ | $-CH_3$ | $-CH_3$ | $ClO4^-$ |
| C-26 | $-C_2H_5$ | $-C_2H_5$ | $-CH_3$ | $-CH_3$ | $-CH_3$ | $-CH_3$ | 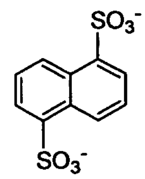 |
| C-27 | $-C_3H_7^{(n)}$ | $-C_3H_7^{(n)}$ | $-CH_3$ | $-CH_3$ | $-CH_3$ | $-CH_3$ | $ClO4^-$ |
| C-28 | $-C_4H_9^{(n)}$ | $-C_4H_9^{(n)}$ | $-CH_3$ | $-CH_3$ | $-CH_3$ | $-CH_3$ | $Cl^-$ |
| C-29 | $-C_4H_9^{(n)}$ | $-CH_3$ | $-CH_3$ | $-CH_3$ | $-CH_3$ | $-CH_3$ | 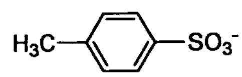 |
| C-30 | $-CH_3$ | $-CH_3$ | $-CH_3$ | $-C_3H_7^{(n)}$ | $-CH_3$ | $-C_3H_7^{(n)}$ | $I^-$ |
| C-31 | $-CH_3$ | $-C_4H_9^{(n)}$ | $-CH_3$ | $-CH_3$ | $-CH_3$ | $-CH_3$ | 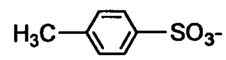 |
| C-32 | $-CH_3$ | 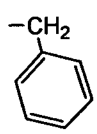 | $-CH_3$ | $-CH_3$ | $-CH_3$ | $-CH_3$ | 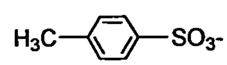 |

[Chem. 35]

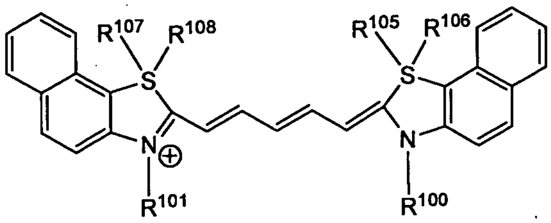

Q

| | R100 | R101 | R105 | R106 | R107 | R108 | Q |
|---|---|---|---|---|---|---|---|
| C-1 | $-CH_3$ | $-CH_3$ | $-CH_3$ | $-CH_3$ | $-CH_3$ | $-CH_3$ | $ClO4^-$ |
| C-2 | $-C_2H_5$ | $-C_2H_5$ | $-CH_3$ | $-CH_3$ | $-CH_3$ | $-CH_3$ | $ClO4^-$ |
| C-3 | $-C_3H_7^{(n)}$ | $-C_3H_7^{(n)}$ | $-CH_3$ | $-CH_3$ | $-CH_3$ | $-CH_3$ | $ClO4^-$ |
| C-4 | $-C_4H_9^{(n)}$ | $-C_4H_9^{(n)}$ | $-CH_3$ | $-CH_3$ | $-CH_3$ | $-CH_3$ | $ClO4^-$ |
| C-5 | $-C_4H_9^{(n)}$ | $-CH_3$ | $-CH_3$ | $-CH_3$ | $-CH_3$ | $-CH_3$ | $ClO4^-$ |
| C-6 | $-CH_3$ | $-CH_3$ | $-CH_3$ | $-CH_3$ | $-CH_3$ | $-CH_3$ | $I^-$ |
| C-7 | $-CH_3$ | $-CH_3$ | $-CH_3$ | $-CH_3$ | $-CH_3$ | $-CH_3$ | 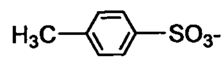 |
| C-8 | $-CH_3$ | 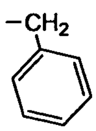 | $-CH_3$ | $-CH_3$ | $-CH_3$ | | 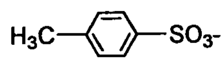 |

[Chem. 36]

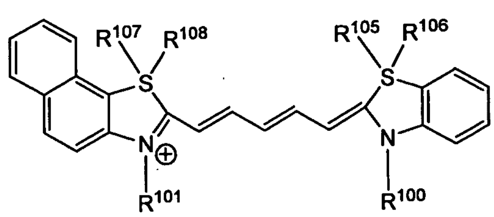

Q

| | R100 | R101 | R105 | R106 | R107 | R108 | Q |
|---|---|---|---|---|---|---|---|
| C-9 | $-CH_3$ | $-CH_3$ | $-CH_3$ | $-CH_3$ | $-CH_3$ | $-CH_3$ | $BF4^-$ |
| C-10 | $-C_2H_5$ | $-C_2H_5$ | $-CH_3$ | $-CH_3$ | $-CH_3$ | $-CH_3$ | $BF4^-$ |

(continued)

| | $R^{100}$ | $R^{101}$ | $R^{105}$ | $R^{106}$ | $R^{107}$ | $R^{108}$ | Q |
|---|---|---|---|---|---|---|---|
| C-11 | $-C_3H_7^{(n)}$ | $-C_3H_7^{(n)}$ | $-CH_3$ | $-CH_3$ | $-CH_3$ | $-CH_3$ | $ClO4^-$ |
| C-12 | $-C_4H_9^{(n)}$ | $-C_4H_9^{(n)}$ | $-CH_3$ | $-CH_3$ | $-CH_3$ | $-CH_3$ | $Cl^-$ |
| C-13 | $-C_4H_9^{(n)}$ | $-CH_3$ | $-CH_3$ | $-CH_3$ | $-CH_3$ | $-CH_3$ | 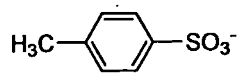 |
| C-14 | $-CH_3$ | $-CH_3$ | $-CH_3$ | $-C_2H_5$ | $-CH_3$ | $-C_2H_5$ | $I^-$ |
| C-15 | $-CH_3$ | $-CH_3$ | $-CH_3$ | $-CH_3$ | $-CH_3$ | $-CH_3$ | 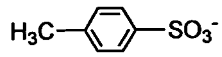 |
| C-16 | $-CH_3$ | 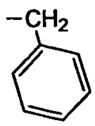 | $-CH_3$ | $-CH_3$ | $-CH_3$ | $-CH_3$ | 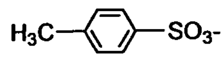 |

[Chem. 37]

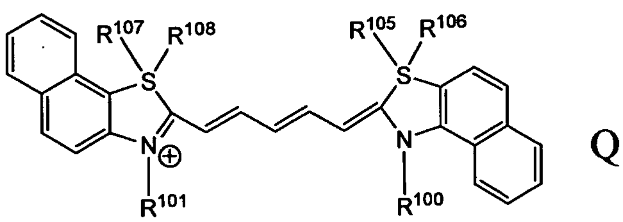

| | $R^{100}$ | $R^{101}$ | $R^{105}$ | $R^{106}$ | $R^{107}$ | $R^{108}$ | Q |
|---|---|---|---|---|---|---|---|
| C-17 | $-CH_3$ | $-CH_3$ | $-CH_3$ | $-C_2H_5$ | $-CH_3$ | $-CH_3$ | $ClO4^-$ |
| C-18 | $-C_2H_5$ | $-C_2H_5$ | $-CH_3$ | $-CH_3$ | $-CH_3$ | $-CH_3$ | $BF4^-$ |
| C-19 | $-C_3H_7^{(n)}$ | $-C_3H_7^{(n)}$ | $-CH_3$ | $-CH_3$ | $-CH_3$ | $-CH_3$ | $ClO4^-$ |
| C-20 | $-C_4H_9^{(n)}$ | $-C_4H_9^{(n)}$ | $-CH_3$ | $-CH_3$ | $-CH_3$ | $-CH_3$ | $Cl^-$ |
| C-21 | $-C_4H_9^{(n)}$ | $-CH_3$ | $-CH_3$ | $-CH_3$ | $-CH_3$ | $-CH_3$ | 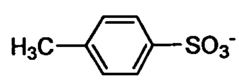 |
| C-22 | $-CH_3$ | $-CH_3$ | $-CH_3$ | $-CH_3$ | $-CH_3$ | $-CH_3$ | $I^-$ |

(continued)

| | $R^{100}$ | $R^{101}$ | $R^{105}$ | $R^{106}$ | $R^{107}$ | $R^{108}$ | Q |
|---|---|---|---|---|---|---|---|
| C-23 | $-CH_3$ | $-CH_3$ | $-CH_3$ | $-CH_3$ | $-CH_3$ | $-CH_3$ | 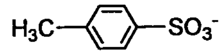 |
| C-24 | $-CH_3$ | 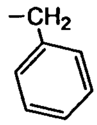 | $-CH_3$ | $-CH_3$ | $-CH_3$ | $-CH_3$ | 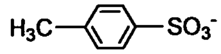 |

[Chem. 38]

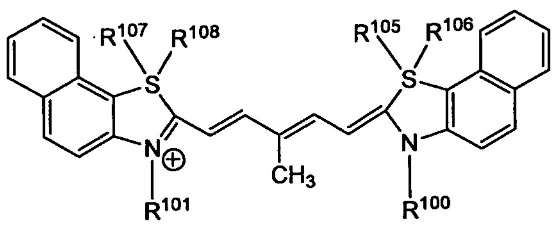

Q

| | $R^{100}$ | $R^{101}$ | $R^{105}$ | $R^{106}$ | $R^{107}$ | $R^{108}$ | Q |
|---|---|---|---|---|---|---|---|
| C-33 | $-CH_3$ | $-CH_3$ | $-CH_3$ | $-CH_3$ | $-CH_3$ | $-CH_3$ | 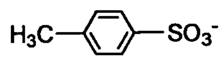 |
| C-34 | $-C_2H_5$ | $-C_2H_5$ | $-CH_3$ | $-CH_3$ | $-CH_3$ | $-CH_3$ | $ClO4^-$ |
| C-35 | $-C_3H_7^{(n)}$ | $-C_3H_7^{(n)}$ | $-CH_3$ | $-CH_3$ | $-CH_3$ | $-CH_3$ | $ClO4^-$ |
| C-36 | $-C_4H_9^{(n)}$ | $-C_4H_9^{(n)}$ | $-CH_3$ | $-CH_3$ | $-CH_3$ | $-CH_3$ | $ClO4^-$ |
| C-37 | $-C_4H_9^{(n)}$ | $-CH_3$ | $-CH_3$ | $-CH_3$ | $-CH_3$ | $-CH_3$ | $ClO4^-$ |
| C-38 | $-CH_3$ | $-CH_3$ | $-CH_3$ | $-CH_3$ | $-CH_3$ | $-CH_3$ | 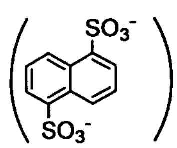 1/2 |

(continued)

| | $R^{100}$ | $R^{101}$ | $R^{105}$ | $R^{106}$ | $R^{107}$ | $R^{108}$ | Q |
|---|---|---|---|---|---|---|---|
| C-39 | $-CH_3$ | $-CH_3$ | $-CH_3$ | $-CH_3$ | $-CH_3$ | $-CH_3$ | 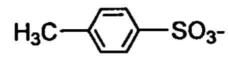 |
| C-40 | $-CH_3$ | 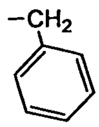 | $-CH_3$ | $-CH_3$ | $-CH_3$ | $-CH_3$ | 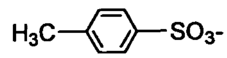 |

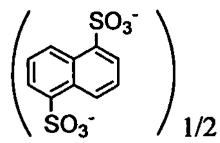

Some of the above cyanine dyes are commercially available. Detailed methods of synthesizing cyanine dyes are described in Cyanine Dyes and Related Compounds, John Wjley & Sons, New York, London, released in 1964, in the series entitled The Chemistry of Heterocyclic Compounds, which is expressly incorporated herein by reference in its entirety.

The visible information recording layer can be formed by coating a coating liquid prepared by dissolving the dyes in a solvent. Any of the various solvents suitable for use in the preparation of coating liquids for recording layers, described further below, may be employed. The details of other additives, the coating method, and the like, are as set forth further below for the recording layer.

The above dyes preferably constitute the principal component of the above visible information recording layer. In the present invention, the term "principal component" means that the content of the dye (total content of dyes when plural dyes are employed) is equal to or greater than 50 mass percent of the total solid component of the visible information recording layer. The dye content of the visible information recording layer preferably constitutes equal to or greater than 80 percent mass, more preferably 90 to 100 mass percent.

When employing the cyanine dye denoted by general formula (I) in combination with dyes denoted by general formulas (1) to (10), it's better to set the mixing ratio so that the reflectance of the optical recording medium at the wavelength of the laser employed in recording is within the specified range of the system. In particular, when drawing an image with the red laser employed with DVD disks, it is desirable to employ a mixture such that the dye of general formula (I) constitutes 5 to 30 mass percent of the total dye in the visible information recording layer, with 10 to 20 mass percent being preferred. The dyes denoted by general formulas (1), (2), (3), (6), and (7) are yellow dyes and do not absorb in the red region. Thus, they cannot absorb laser energy when drawing an image with a red laser. When employing such a laser, recording is conducted by using dyes having absorption in the red range. The cyanine dye of general formula (I) is particularly desirable as a dye for combined use in such cases.

The thickness of the visible information recording layer is preferably 0.01 to 200 micrometers, more preferably 0.05 to 150 micrometers, and further preferably, 0.1 to 50 micrometers. The ratio of the thickness of the visible information recording layer to that of the recording layer (thickness of visible information recording layer/thickness of recording layer) preferably ranges from 1/100 to 100/1, more preferably from 1/10 to 10/1.

The visible information that is recorded on the visible information recording layer means information that can be identified visually, including all visibly recognizable information such as characters (strings), patterns, and graphics. Examples of character information is: information specifying allowed users, information specifying possible use periods, information specifying frequency of use, rental information, information specifying resolution, information specifying layers, information specifying users, copyright information, copyright number information, manufacturer information, manufacturing date information, sale date information, information on store where sold or seller, use set number information, information specifying a region, information specifying language, information specifying applications, information on the product user, and information on use numbers.

<Layer Structure>

The optical recording medium of the present invention may comprise, for example, a first support, a recording layer capable of recording and/or reproducing information by the irradiation of a laser beam, a reflective layer, a visible information recording layer, and a second support in this order. However, the layer structure of the optical recording medium of the present invention is not specifically limited other than that there be a visible information recording layer on a support and that the visible information recording layer comprises the above-described dye. A variety of layer structures are thus possible. Fig. 1 (a schematic cross-sectional view) shows an example of the optical recording medium of the present invention.

The optical recording medium 10 shown in Fig. 1 is comprised of a first support 16, a recording layer 18 formed over first support 16, a first reflective layer 20 formed over recording layer 18, an adhesive layer 22 formed over first reflective layer 20, a second reflective layer 24 formed over adhesive layer 22, a visible information recording layer 14 formed over second reflective layer 24, and a second support 26 formed over visible information recording layer 14. The optical recording medium may be of the read only, recordable, or rewritable type, but the recordable type is desirable. When of the recordable type, the form of recording is not specifically limited; recording may be accomplished by phase change, photomagnetically, with dyes, or the like. However, recording with dyes is desirable.

The following are examples of the layer structure of the optical recording medium of the present invention:

(1) The first layer structure, as shown in Fig. 1, is comprised of a first support 16, on which are sequentially formed a recording layer 18, a first reflective layer 20, an adhesive layer 22, and a second reflective layer 24. On second reflective layer 24 are provided a visible information recording layer 14 and a second support 26.

(2) The second layer structure, not shown in the drawing, is comprised of a first support 16, on which are sequentially formed a recording layer 18, a first reflective layer 20, and an adhesive layer 22. On adhesive layer 22 are provided a visible information recording layer 14 and a second support 26.

(3) The third layer structure, not shown in the drawing, is comprised of a first support 16, on which are sequentially formed a recording layer 18, a first reflective layer 20, a protective layer, and an adhesive layer 22. On adhesive layer 22 are provided a visible information recording layer 14 and a second support 26.

(4) The fourth layer structure, not shown in the drawing, is comprised of a first support 16, on which are sequentially formed a recording layer 18, a first reflective layer 20, a first protective layer, an adhesive layer 22, and a second protective layer. On the second protective layer are provided a visible information recording layer 14 and a second support 26.

(5) The fifth layer structure, not shown, is comprised of a first support 16, on which are sequentially formed a recording layer 18, a first reflective layer 20, a first protective layer, an adhesive layer 22, a second protective layer, and a second reflective layer 24. On second reflective layer 24 are provided a visible information recording layer 14 and a second support 26.

Layer structures (1) to (5) are merely examples. These layer structures need not necessarily be in the above-stated sequences; some replacement is possible. Partial omission is also possible. Further, each layer may be constituted of a single layer or multiple layers.

When the optical recording medium of the present invention is a CD-R, it is preferably comprised of a first support 16, in the form of a transparent disk 1.2 $\pm$ 0.2 mm in thickness on which are formed pregrooves 28 (see Fig. 1) at a track pitch of 1.4 to 1.8 micrometers, on which are sequentially provided a recording layer 18, a first reflective layer 20, a protective layer, an adhesive layer 22, a second reflective layer 24, a visible information recording layer 14 containing the above-described dyes, and a second support 26. When applied to a DVD-R, the following two forms are preferable:

(1) An optical information recording medium comprised of two laminated members, each of which is comprised of a first support 16 in the form of a transparent disk 0.6 $\pm$ 0.1 mm in thickness on which are formed pregrooves 28 at a track pitch of 0.6 to 0.9 micrometer, on which are sequentially provided a recording layer 18 and a light-reflecting layer, the two laminated members being bonded with their respective recording layers 18 facing inward, with a visible information recording layer 14 that is 1.2 $\pm$ 0.2 mm in thickness being formed on at least the first support 16 of one of the two.

(2) An optical information recording medium comprised of a laminated member being comprised of a first support 16 in the form of a transparent disk 0.6 $\pm$ 0.1 mm in thickness on which are formed pregrooves 28 at a track pitch of 0.6 to 0.9 micrometer, on which are formed a recording layer 18 and a light-reflecting layer; and a transparent disk-shaped protective support of the same shape as the disk-shaped first support 16 of the laminated member, the laminated member and the protective support being bonded with the recording layer 18 facing inward, with a visible information recording layer 14 that is 1.2 $\pm$ 0.2 mm in thickness being provided on the support of at least

one of the two. In the above DVD-R optical information recording media, a configuration is also possible in which a protective layer is further provided on the light-reflecting layer.

Each of the above-mentioned layers and support will be sequentially described below.

<Recording Layer>

The recording layer in the optical recording medium of the present invention is a layer that is capable of recording and/or reproducing information when irradiated with a laser beam. The recording layer is a layer that can record encoded information such as digital information. For example, it may be of a recording (preferably a dye recording), phase-changing, or photomagnetic type; there is no specific limitation. However, a dye type is desirable.

Specific examples of the dyes contained in a dye-type recording layer are cyanine dyes, oxonol dyes, metal complex dyes, azo dyes, and phthalocyanine dyes. The dyes described in Japanese Unexamined Patent Publication (KOKAI) Heisei Nos. 4-74690, 8-127174, 11-53758, 11-334204, 11-334205, 11-334206, and 11-334207; and Japanese Unexamined Patent Publication (KOKAI) Nos. 2000-43423, 2000-108513, and 2000-158818 may also be suitably employed. The contents of the above publications are expressly incorporated herein by reference in their entirety.

The above recording layer can be formed by dissolving a recording substance such as a dye in a suitable solvent along with a binder or the like to prepare a coating liquid, coating the coating liquid to a support to form a coating, and then drying the coating. The concentration of the recording substance in the coating liquid generally falls within a range of 0.01 to 15 mass percent, preferably within a range of 0.1 to 10 mass percent, more preferably within a range of 0.5 to 5 mass percent, and further preferably, within a range of 0.5 to 3 mass percent.

The recording layer may be formed by a method such as vapor deposition, sputtering, CVD, or solvent coating. Of these, the use of solvent coating is desirable. In that case, the coating liquid is prepared by dissolving optionally desired quenchers, binders, and the like along with the dyes in a solvent. Next, the coating liquid is coated to the surface of a support to form a coating. The coating is then dried, yielding the recording layer.

Examples of solvents that are suitable for use in the coating liquid are: esters such as butyl acetate, ethyl lactate, and Cellosolve acetate; ketones such as methyl ethyl ketone, cyclohexanol, and methyl isopropyl ketone; chlorinated hydrocarbons such as dichloromethane, 1,2-dichloroethane, and chloroform; amides such as dimethyl formamide; hydrocarbons such as methyl cyclohexane; ethers such as dibutylether, diethylether, tetrahydrofuran, and dioxane; alcohols such as ethanol, n-propanol, isopropanol, n-butanol, and diacetone alcohol; fluorine-based solvents such as 2,2,3,3-tetrafluoropropanol; and glycol ethers such as ethylene glycol monomethyl ether, ethylene glycol monoethyl ether, and propylene glycol monomethyl ether.

These solvents may be employed singly or in combinations of two or more, taking into account the solubility of the dyes employed. To the coating liquid may be further added various additives such as oxidation inhibitors, UV absorbants, plasticizers, and lubricants based on the objective.

Examples of suitable binders when employing a binder are: natural organic polymeric substances such as gelatins, cellulose derivatives, dextran, rosin, and rubber; hydrocarbon resins such as polyethylene, polypropylene, polystyrene, and polyisobutylene; vinyl resins such as polyvinyl chloride, polyvinylidene chloride, and copolymers of polyvinyl chloride and polyvinyl acetate; acrylic resins such as polymethyl acrylate and polymethyl methacrylate; and synthetic organic polymers such as initial condensates of thermosetting resins such as polyvinyl alcohol, chlorinated polyethylene, epoxy resins, bunayral resins, rubber derivatives, and phenol formaldehyde resins.

When employing a binder in the recording layer, the quantity employed generally falls within a range of 0.01 to 50 times, preferably 0.1 to 5 times of the mass of dye.

Examples of methods of coating the above solvent coating are spraying, spin coating, dipping, roll coating, blade coating, using a doctor roll, and screen printing. Recording layer 18 may be a single layer or multiple layers. The thickness of recording layer 18 generally falls within a range of 10 to 500 nm, preferably within a range of 15 to 300 nm, and more preferably, within a range of 20 to 150 nm.

To enhance the photoresistance of the recording layer, various antifading agents may be incorporated. Singlet oxygen quenchers are generally employed as antifading agents. Known singlet oxygen quenchers that are described in publications such as patent specifications may be employed. Antifading agents such as singlet oxygen quenchers are normally employed in a quantity falling within a range of 0.1 to 50 mass percent, preferably within a range of 0.5 to 45 mass percent, more preferably within a range of 3 to 40 mass percent, and further preferably, within a range of 5 to 25 mass percent of the mass of the dyes.

Specific examples of materials included in phase changing-type recording layers are: Sb-Te alloy, Ge-Sb-Te alloy, Pd-Ge-Sb-Te alloy, Nb-Ge-Sb-Te alloy, Pd-Nb-Ge-Sb-Te alloy, Pt-Ge-Sb-Te alloy, Co-Ge-Sb-Te alloy, In-Sb-Te alloy, Ag-In-Sb-Te alloy, Ag-V-In-Sb-Te alloy, and Ag-Ge-In-Sb-Te alloy. The thickness of a phase changing-type recording layer 18 is preferably 10 to 50 nm, more preferably 15 to 30 nm. A phase changing-type recording layer may be formed by a vapor thin-film deposition method such as sputtering, vacuum deposition or the like.

<First Support>

First support 16 in the optical recording medium shown in Fig. 1 can be formed using any material selected from among the various materials conventionally employed as supports in optical recording media. Examples of the material employed in first support 16 are: glass; polycarbonate; acrylic resins such as polymethyl methacrylate; vinyl chloride resins such as polyvinyl chloride and vinyl chloride copolymers; epoxy resins; amorphous polyolefins; and polyesters. These may be employed in combination as needed. These materials may be employed in the form of films, or as a rigid first support 16. Of these materials, polycarbonate is desirable from the viewpoints of moisture resistance, dimensional stability, cost, and the like.
First support 16 is preferably 0.1 to 1.2 mm, more preferably 0.2 to 1.1 mm, in thickness.
To improve smoothness, increase adhesion, and prevent alteration of recording layer 18, an undercoating layer may be provided on the outer surface side (side on which pregrooves 28 are formed) of first support 16 on the side where recording layer 18 is provided.
Examples of the material used in the undercoating layer are: polymethyl methacrylate, acrylic acid - methacrylic acid copolymer, styrene - maleic anhydride copolymer, polyvinyl alcohol, N-methylol acrylamide, styrene - vinyl toluene copolymer, chlorosulfonated polyethylene, nitrocellulose, polyvinyl chloride, chlorinated polyolefin, polyester, polyimide, vinyl acetate - vinyl chloride copolymer, ethylene - vinyl acetate copolymer, polyethylene, polypropylene, polycarbonate, other polymeric substances, and surface-modifying agents such as silane coupling agents. The undercoating layer may be formed by preparing a coating liquid by dissolving or dispersing the above substance in a suitable solvent and coating the coating liquid by a coating method such as spin coating, dip coating, or extrusion coating to the surface of first support 16.
The thickness of the undercoating layer generally falls within a range of 0.005 to 20 micrometers, preferably within a range of 0.01 to 10 micrometers.

<First Reflective Layer>

As shown in Fig. 1, a first reflective layer 20 may be provided adjacent to recording layer 18 for the purpose of improving reflectivity during the reproduction of information. The light-reflecting material serving as the material of first reflective layer 20 is a substance with high reflectance for laser beams, examples of which are metals and semimetals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn, and Bi, as well as stainless steel. These substances may be employed singly, in combinations of two or more, or in the form of alloys. First reflective layer 20 may be formed on first support 16 or recording layer 18 by, for example, vapor deposition, sputtering, or ion plating the light-reflecting substance. The thickness of first reflective layer 20 generally falls within a range of 10 to 300 nm, preferably within a range of 50 to 200 nm.

<Adhesive Layer>

As shown in Fig. 1, an adhesive layer 22 can be formed to increase adhesion between first reflective layer 20 and second support 26.
The material included in adhesive layer 22 is preferably a photosetting resin. Of these, to prevent warping of the disk, a material with a low contraction rate upon curing is preferable. Examples of such thermosetting resins are UV-setting resins (UV-setting adhesives) such as "SD-640" and "SD-347" manufactured by Dainippon Ink and Chemicals, Inc. To impart elasticity, the thickness of adhesive layer 22 preferably falls within a range of 1 to 1,000 micrometers, more preferably a range of 5 to 500 micrometers, and further preferably, within a range of 10 to 100 micrometers.

<Second Support>

As shown in Fig. 1, a second support 26 (protective support) can be provided to protect visible information recording layer 14. Second support 26 can be formed from the same materials as above-described first support 16.

<Protective Layers>

Protective layers can be provided to physically and chemically protect first reflective layer 20, recording layer 18 and the like. In forms similar to the manufacturing of DVD-R optical recording media, that is, for configurations in which two supports (including cases where one of which is second support 26) are bonded with recording layer 18 facing inward, the formation of a protective layer is not necessarily required.
Examples of materials employed in protective layers are: inorganic substances such as ZnS, ZnS-$SiO_2$, SiO, $SiO_2$, $MgF_2$, $SnO_2$ and $Si_3N_4$; and organic substances such as thermoplastic resins, thermosetting resins, and UV-setting

resins.
When employing thermoplastic or thermosetting resins, a coating liquid can be prepared by dissolving the resins in a suitable solvent and then coating and drying the coating liquid to form a protective layer. A UV-setting resin can be coated as is, or dissolved in a suitable solvent to prepare a coating liquid, which is then coated, then irradiated to cure the resin, forming a protective layer. Various additives, such as antistatic agents, oxidation inhibitors, and UV absorbants, can be added to the coating liquid based on the objective. Protective layers generally range from 0.1 micrometer to 1 mm in thickness.
The optical recording medium of the present invention can be applied as the optical recording medium comprising recording portions (pits) in which reproducible information is recorded by laser beam, that is so-called a read-only optical information recording medium.

[Method of recording visible information]

The first method of recording visible information of the present invention (referred to as "recording method I", hereinafter) is the method of recording visible information on the visible information recording layer of the optical recording medium of the present invention, wherein the visible information is recorded by using the same laser bean as that used in recording on the recording layer.
The second method of recording visible information of the present invention (referred to as "recording method II", hereinafter) is the method of recording visible information on the visible information recording layer of the disk-shaped optical recording medium of the present invention, wherein the visible information is recorded by using a laser beam that oscillates in a radial direction of the optical recording medium as well as is irradiated plural times on approximately identical paths. In recording method II, visible information is preferably recorded by using the same laser beam as that used in recording on the recording layer, as in recording method I.
Recording methods I and II are sometimes collectively referred to as the "recording method of the present invention" hereinafter.
In recording method I, the same laser beam (laser beam 12 in Fig. 1) is employed to record visible information as the laser beam (laser beam 12 in Fig. 1) used to record information on the recording layer. Thus, the beam source can be shared in a single recording device, permitting a reduction in the hardware resources of the recording device to a minimum required level and readily permitting the recording of images by an ordinary user with such a device. Further, since the above-described dyes are incorporated into the visible information recording layer in the optical recording medium of the present invention, the advantage of being able to form images of high contrast and good visibility is achieved. The recording of visible information such as images on the visible information recording layer of the optical recording medium of the present invention is optimally conducted by the method of recording visible information of the present invention, but is not limited thereto.
In the recording method of the present invention, the recording of visible information such as images on the visible information recording layer and the recording of optical information on the recording layer can be conducted with a single optical disk drive (recording device) functioning to record on both layers. When a single optical disk drive is employed in this manner, following recording on either the visible information recording layer or the recording layer, the disk can be flipped over for recording on the other layer. For example, the optical disk drives described in Japanese Unexamined Patent Publication (KOKAI) Nos. 2003-203348 and English language family member US 2003/0117932 A1, 2003-242750 and the like can be employed as optical disk drives having the function of recording visible information on the visible information recording layer. The contents of the above publications are expressly incorporated herein by reference in their entirety.
When recording visible information on the visible information recording layer, the optical recording medium and the laser pickup can be moved relatively along the surface of the optical recording medium by the recording device. The laser beam can synchronize with this relative movement, and the laser beam can be modulated based on image data such as characters or drawings to be formed as images and directed onto the visible information recording layer to record a visible image. Such a configuration, for example, is described in Japanese Unexamined Patent Publication (KOKAI) No. 2002-203321 and English language family member U.S. Patent No. 7,015,939, and the like. The contents of the above publications are expressly incorporated herein by reference in their entirety.
In ordinary digital data recording, a laser beam is normally irradiated once over a roughly elliptical path. Generally, in the course of forming pits in the dye recording layer, the formation of pits producing adequate reflectance and an adequate degree of modulation for identification by the drive is considered important. Thus, dyes yielding adequate reflectance and an adequate degree of modulation by this single pass of the laser beam are selected as the dye in the dye recording layer.
By contrast, the system described in Japanese Unexamined Patent Publication (KOKAI) No. 2002-203321 has been proposed as a new method of image formation. In this system, a laser beam is irradiated plural times over roughly the same paths to record visible information such as an image on a visible information recording layer containing dye.

Further, although the laser beam cannot be oscillated in a radial direction of the optical disk since the positions at which bits are radially formed are specified on common optical disks, in the above system, the laser beam oscillates in a radial direction of the optical disk and irradiated plural times over approximately the same paths to form visible information. The dyes employed in the present invention are all suited to this system and permit the formation by the above-described recording method of sharp visible information of high contrast and good resistance to light.

The above-mentioned image forming method will be described below in detail with reference to Figs. 2 and 3. Fig. 2 shows the path of the laser beam that is irradiated to form an image.

First, as shown in Fig. 2, the laser beam source is positioned radially at a spot where the initial image is to be formed along the inside perimeter of an optical disk. Next, the circumferential position θ is detected, and the laser power is switched to a prescribed high output (a value that changes the visible light characteristics of the visible information recording layer, such as equal to or greater than 1 mW) at various circumferential image formation positions indicated by the image data for the corresponding radial position. In this manner, the visible light characteristics of the visible information recording layer are changed (discolored or the like) at spots where the high-output laser beam has been irradiated, forming an image.

Subsequently, the optical disk is rotated once and returned to a circumferential reference position, a feed motor or the like displaces the laser beam source outward by the amount $\Delta r$ of a prescribed pitch, and the laser power is switched to a prescribed high output at various circumferential image formation positions indicated by the image data for the corresponding radial position to form an image. Subsequently, this operation is repeated and the laser beam source is sequentially displaced outward by a prescribed pitch $\Delta r$ each time around to form an image. Fig. 2 shows the path of the laser beam on the optical disk surface (surface on the visible information recording layer side, sometimes referred to as the "label surface", hereinafter) in this image forming operation. The portions drawn in bold lines indicate portions on which the laser power is switched to high output to form an image. Fig. 3 is an expanded view of the path of the laser beam in the portion drawn in bold lines. As shown in Fig. 3, the laser beam is oscillated in a radial direction of the optical disk and irradiated in plural times on approximately the identical paths to form an image. The oscillating width of the laser beam and the number of laser beam irradiation on approximately the identical paths are determined for each recording device.

In the above image forming method, radial positions where there are no image formation spots are not scanned and the laser beam source is moved directly to the next radial location of an image formation spot to form an image. The larger pitch $\Delta r$ is, the greater the gaps that are generated in the image that is formed, even in images that should normally be formed so as to be connected radially. The gaps can be rendered inconspicuous by reducing pitch $\Delta r$, but the number of passes required to form an image over the entire label surface increases and the time required for image formation ends up increasing. In the device described in Japanese Unexamined Patent Publication (KOKAI) No. 2002-203321, an oscillating signal (sine waves, chopping waves, or the like) generated by an oscillating signal generation circuit during image formation is used to drive a tracking actuator, causing an object lens to oscillate in a radial direction of the disk. In this manner, the laser beam is made to vibrate in a radial direction of the disk, permitting image formation in which there is no gap (or a small gap) even for a relatively large pitch $\Delta r$. The frequency of the oscillating signal can be set to about several kHz, for example. Pitch $\Delta r$ can be set to about 50 to 100 micrometers, for example.

Japanese Unexamined Patent Publication (KOKAI) No. 2002-203321 can be referenced for details of the above image forming method.

The recording device that records the optical information (digital information) on the recording layer comprises at least a laser pickup emitting a laser beam and a rotating mechanism that causes the optical recording medium to rotate, and is capable of recording on and reproducing from the recording layer by irradiating a laser beam from the laser pickup toward the recording layer of the optical recording medium while the latter is being rotated. Such a recording device configuration is known.

The recording of information (digital information) on the recording layer will be described below. In the case of a dye-type recording layer, a laser beam is irradiated by the laser pickup while rotating an unrecorded optical recording medium described above at a prescribed linear recording speed. The irradiated beam is absorbed by the dye in the recording layer, causing the temperature to rise locally. A desired void (bit) is generated, thereby changing the optical characteristics to record information.

When forming a single bit, the recording waveform of the laser beam can be either a series of pulses or a single pulse. The ratio to the length (the bit length) actually being recorded is important.

The pulse width of the laser beam preferably falls within a range of 20 to 95 percent, more preferably a range of 30 to 90 percent, and further preferably a range of 35 to 85 percent, of the bit length actually being recorded. When the recording waveform is a series of pulses, it means that the sum of the pulses falls within the above-stated range.

The power of the laser beam varies with the linear recording speed. At a linear recording speed of 3.5 m/s, the power preferably falls within a range of 1 to 100 mW, more preferably within a range of 3 to 50 mW, and further preferably within a range of 5 to 20 mW. When the linear recording speed is doubled, the range of the power of the laser beam is preferably adjusted $2^{1/2}$-fold. To increase the recording density, the NA of the object lens employed in the pickup is

preferably equal to or greater than 0.55, more preferably equal to or greater than 0.6. In the present invention, a semiconductor laser having an oscillation wavelength falling within a range of 350 to 850 nm can be employed as the recording beam.

The case of a phase changing-type recording layer will be described below. In a phase changing type, the recording layer is comprised of the above-described substances and a laser beam is irradiated to change the phase back and forth between a crystalline phase and an amorphous phase. During information recording, a concentrated laser beam pulse is briefly irradiated, partially melting the phase changing recording layer. The melted portion is rapidly cooled by heat dispersion and solidifies, forming an amorphous recording mark. During deletion, the recording mark portion is irradiated by the laser beam, heating it to a temperature below the melting point of the recording layer but above its crystallization temperature. It is then gradually cooled, causing the amorphous recording mark to crystallize and return to an unrecorded state.

EXAMPLES

The present invention will be further described below based on Examples. However, the present invention is not limited to the embodiments described in Examples.

(Example 1)

Example 1 of the optical information recording medium has the layer structure shown in Fig. 1. It is a DVD-R type optical recording medium comprised of two bonded disks. The method of manufacturing the optical recording medium of Example 1 will be described below.

A first support 16 that was 0.6 mm in thickness, 120 mm in diameter, and had spiral (helical) grooves (130 nm deep, 300 nm in width, with a track pitch of 0.74 micrometers) was formed out of polycarbonate resin by injection molding. Subsequently, a coating liquid was prepared by dissolving 1.5 g each of the two oxonol dyes indicated below in 100 mL of 2,2,3,3-tetrafluoro-1-propanol. The coating liquid was coated by spin coating to the surface of first support 16 on which pregrooves 28 had been formed, yielding a recording layer 18.

[Chem. 39]

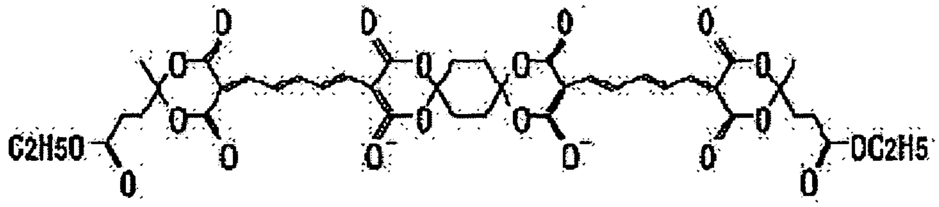

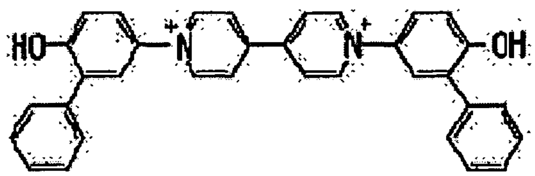

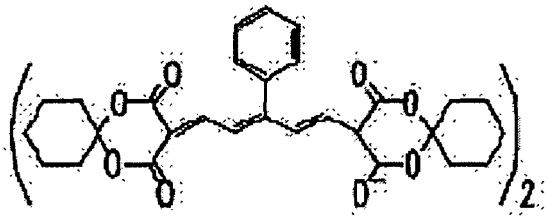

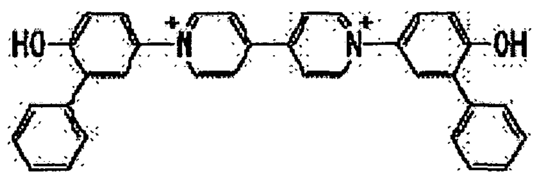

Next, silver was sputtered onto recording layer 18 to form a first reflective layer 20 that was 120 nm in thickness, UV-curing resin (SD318, made by Dainippon Ink and Chemicals, Inc.) was coated by spin coating, and UV radiation was irradiated to cure the resin, forming a first protective layer that was 10 micrometers in thickness. The above steps yielded a first disk.

To form a visible information recording layer 14, 1.0 g of the following dye (1)-1 and 0.2 g of the following dye (A) were dissolved in 100 mL of 2,2,3,3-tetrafluoro-1-propanol to prepare a coating liquid for visible information recording layer. The coating liquid for visible information recording layer was spin coated on a second support 26 that was 0.6 mm in thickness and 120 mm in diameter to form a visible information recording layer 14.

[Chem. 40]

(1)-1

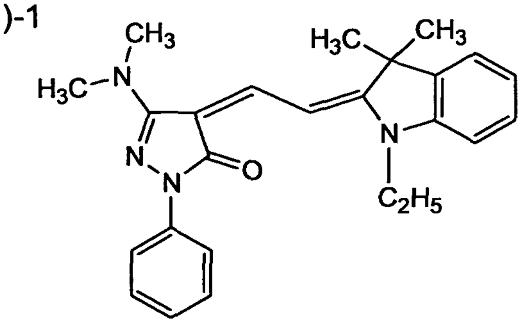

[Chem. 41]

Dye (A)

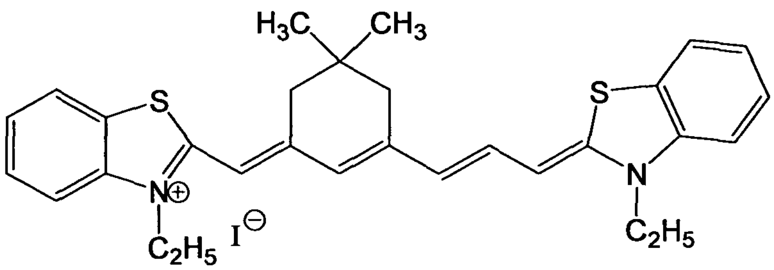

Next, silver was sputtered onto visible information recording layer 14 to form a second reflective layer 24 that was 120 nm in thickness, UV-curing resin (SD318, made by Dainippon Ink and Chemicals, Inc.) was coated by spin coating, and UV radiation was irradiated to cure the resin, forming a second protective layer that was 10 micrometers in thickness. The above steps yielded a second disk.

The first and second disks were bonded together to form a single disk by the following steps. First, a slow-acting cationic polymerization adhesive (SDK7000, made by Sony Chemicals Corp.) was printed by screen printing on both the first protective layer of the first disk and the second protective layer of the second disk. A printing plate with a mesh size of 300 was used for the screen printing. Next, immediately after using a metal halide lamp to irradiate UV radiation, the first and second disks were bonded on their protective layer sides. Pressure was applied from both sides and left in place for 5 minutes to prepare the optical recording medium of Example 1.

(Examples 2 to 11, Comparative Example)

With the exception that the dyes employed in the visible information recording layer were changed to the dyes indicated in Table 2, optical recording media were manufactured in the same manner as in Example 1.

[Chem. 42]

(3)-1

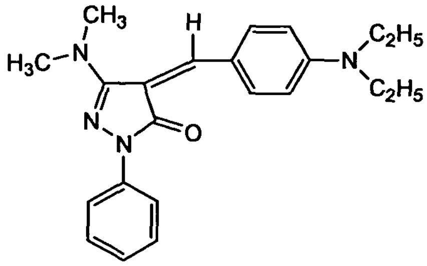

(4)-1

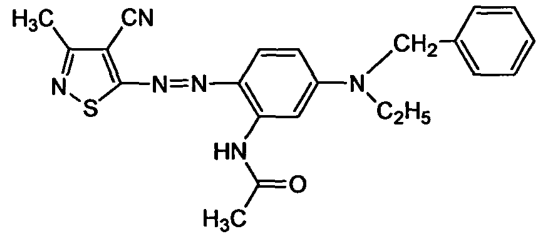

(5)-1

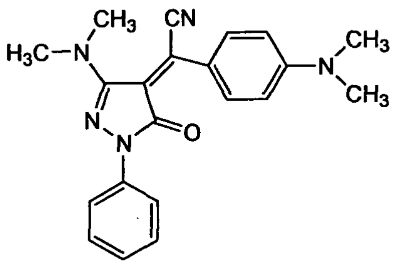

(6)-1

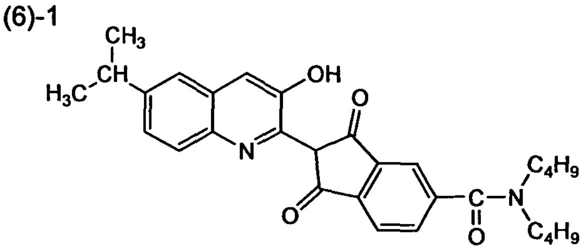

(7)-1

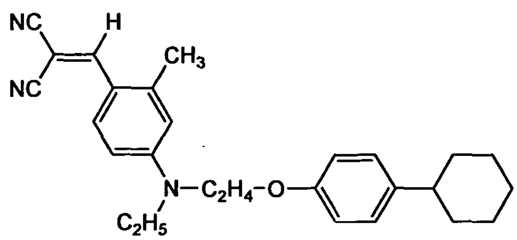

(8)-1

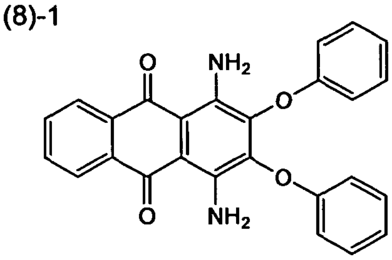

(9)-1

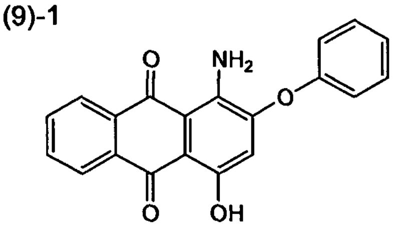

(10)-1

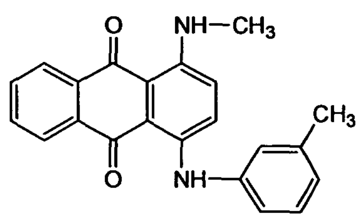

(Contrast Evaluation)

Recording was conducted in the following manner with the optical recording media prepared in Examples 1 to 9. Using the recording device (the laser being a semiconductor laser with a wavelength of 660 nm) having a laser pickup emitting a laser beam and a rotation mechanism rotating the optical recording medium described in Japanese Unexamined Patent Publication (KOKAI) No. 2002-203321, while relatively moving the laser pickup along the surface of the optical recording medium, the semiconductor laser beam was synchronized with the relative movement and modulated based on desired image data. Under conditions of a linear speed of 3.5 m/s and a recording power of 8 mW, the focused laser beam was irradiated onto visible information recording layer 14 to record a visible image. At the time, the laser beam was oscillated in a radial direction of the optical disk and irradiated in plural times on approximately the identical paths to record the visible information. With the optical recording medium being rotated by the rotation mechanism, it is possible for the laser pickup of the recording layer 18 to irradiate the laser beam and record electronic information.
The absolute reflectance of portions of the visible information recording layer exposed to the laser and portions unexposed to the laser was measured for each of the optical recording media on which visible images had been recorded as set

forth above. The following equation was then used to calculate the Sv, and the contrast was evaluated according to the following evaluation criteria.

[Equation 1]

$$Sv = \frac{\int_{410}^{720} |D(\lambda) - U(\lambda)| V(\lambda) d\lambda}{\int_{410}^{720} D(\lambda) V(\lambda) d\lambda}$$

D(λ): Spectral reflectivity of the portion exposed to the laser beam [%]
U(λ): Spectral reflectivity of the portion unexposed to the laser beam [%]
V(λ): CIE standard spectral luminous efficiency

[Table 1]

| <Condition><br>(1) Drive drawing condition | |
|---|---|
| Laser wavelength | 660nm |
| NA | 0.66 |
| Drawing power | 8 mW |
| Rotation speed | 4500rpm(at constant angle rate) |
| Drawing time | 6 min |
| Swinging frequency | 200 Hz |
| Swinging width | 50 μm |
| Overwrite | 13 times |
| (2) Measurement condition by spectrophotometer<br>(Absolute reflectance measured by spectrophotometer) | |
| Wavelength range | 410-720nm |
| Incident angle to sample surface | 5° |

CIE standard spectral luminous efficiency
(according to Publication CIE No.18.2(1983),No41(1978))

| Wavelength λ [nm] | Luminous efficiency V(λ) | Wavelength λ [nm] | Luminous Efficiency V(λ) | Wavelength λ [nm] | Luminous efficiency V(λ) |
|---|---|---|---|---|---|
| 410 | 0.001210 | 515 | 0.608200 | 620 | 0.381000 |
| 415 | 0.002180 | 520 | 0.710000 | 625 | 0.321000 |
| 420 | 0.004000 | 525 | 0.793200 | 630 | 0.265000 |
| 425 | 0.007300 | 530 | 0.862000 | 635 | 0.217000 |
| 430 | 0.011600 | 535 | 0.914850 | 640 | 0.175000 |
| 435 | 0.016840 | 540 | 0.954000 | 645 | 0.138200 |

(continued)

| Wavelength λ [nm] | Luminous efficiency V(λ) | Wavelength λ [nm] | Luminous Efficiency V(λ) | Wavelength λ [nm] | Luminous efficiency V(λ) |
|---|---|---|---|---|---|
| 440 | 0.023000 | 545 | 0.980300 | 650 | 0.107000 |
| 445 | 0.029800 | 550 | 0.994950 | 655 | 0.081600 |
| 450 | 0.038000 | 555 | 1.000000 | 660 | 0.061000 |
| 455 | 0.048000 | 560 | 0.995000 | 665 | 0.044580 |
| 460 | 0.060000 | 565 | 0.978600 | 670 | 0.032000 |
| 465 | 0.073900 | 570 | 0.952000 | 675 | 0.023200 |
| 470 | 0.090980 | 575 | 0.915400 | 680 | 0.017000 |
| 475 | 0.112600 | 580 | 0.870000 | 685 | 0.011920 |
| 480 | 0.139020 | 585 | 0.816300 | 690 | 0.008210 |
| 485 | 0.169300 | 590 | 0.757000 | 695 | 0.005723 |
| 490 | 0.208020 | 595 | 0.694900 | 700 | 0.004102 |
| 495 | 0.258600 | 600 | 0.631000 | 705 | 0.002929 |
| 500 | 0.323000 | 605 | 0.566800 | 710 | 0.002091 |
| 505 | 0.407300 | 610 | 0.503000 | 715 | 0.001484 |
| 510 | 0.503000 | 615 | 0.441200 | 720 | 0.001047 |

< Standards for evaluation>

5 (Excellent contrast): equal to or greater than 0.25
4 (Good contrast): equal to or greater than 0.20 but less than 0.25
3 (Practically sufficient contrast): equal to or greater than 0.15 but less than 0.20
2 (Insufficient contrast): equal to or greater than 0.10 but less than 0.15
1 (Poor contrast): less than 0.10

[Table 2]

| Test No. | Dye 1 | | Dye 2 | | Color (Visual observation) | Results of contrast evaluation |
|---|---|---|---|---|---|---|
| | Type | Amount added (g) | Type | Amount added (g) | | |
| Ex. 1 | (1)-1 | 1.0 | (A) | 0.2 | Greenish yellow | 5 |
| Ex. 2 | (3)-1 | 1.0 | (A) | 0.2 | Greenish yellow | 5 |
| Ex. 3 | (4)-1 | 1.0 | (A) | 0.2 | Purplish red | 5 |
| Ex. 4 | (5)-1 | 1.0 | (A) | 0.2 | Purplish red | 5 |
| Ex. 5 | (6)-1 | 1.0 | (A) | 0.2 | Greenish yellow | 5 |
| Ex. 6 | (7)-1 | 1.0 | (A) | 0.2 | Greenish yellow | 5 |
| Ex. 7 | (8)-1 | 1.0 | (A) | 0.2 | Purplish red | 5 |
| Ex. 8 | (9)-1 | 1.0 | (A) | 0.2 | Purplish red | 5 |
| Ex. 9 | (10)-1 | 1.0 | (A) | 0.2 | Blue | 5 |
| Ex. 10 | (10)-1 | 1.2 | - | - | Blue | 5 |
| Ex. 11 | (10)-1 | 0.6 | (5)-1 | 0.6 | Blue | 5 |
| Comp. Ex. | - | - | (A) | 1.2 | Bluish purple | 3 |

As shown in Table 2, the contrast of the visible information recording layer was good and sharp image recording was possible in the optical recording media of Examples 1 to 11. In addition, recording media on which images with various colors could be drawn were obtained by selecting the combination of dyes.

## BRIEF DESCRIPTION OF THE DRAWINGS

[Fig. 1] It shows an example of the optical recording medium of the present invention (as a schematic cross-section).
[Fig. 2] It shows an example of the path of the laser beam on the optical disk surface of the optical disk during image formation.
[Fig. 3] It is an enlarged view of the path of the laser beam in the portion delimited by the bold line in Fig. 2.

## EXPLANATIONS OF SYMBOLS

| | |
|---|---|
| 10: Optical recording medium | 12: Laser beam |
| 14: Visible image recording layer | 16: First support |
| 18: Recording layer | 20: First reflective layer |
| 22: Adhesive layer | 24: Second reflective layer |
| 26: Second support | 28: Pregroove |

## Claims

**1.** An optical recording medium comprising a visible information recording layer on a support, wherein the visible information recording layer comprises a dye denoted by the following general formula (1):

[Chem. 1]

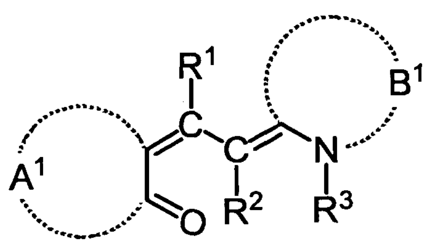

General formula (1)

wherein, in general formula (1), each of $R^1$, $R^2$, and $R^3$ independently denotes a hydrogen atom or a monovalent substituent, $A^1$ denotes an atom group forming a heterocyclic ring with carbon atoms bonded at either end, and $B^1$ denotes an atom group forming a heterocyclic ring with a carbon atom and a nitrogen atom at either end.

**2.** The optical recording medium according to claim 1, wherein the dye denoted by general formula (1) is a dye denoted by the following general formula (2):

[Chem. 2]

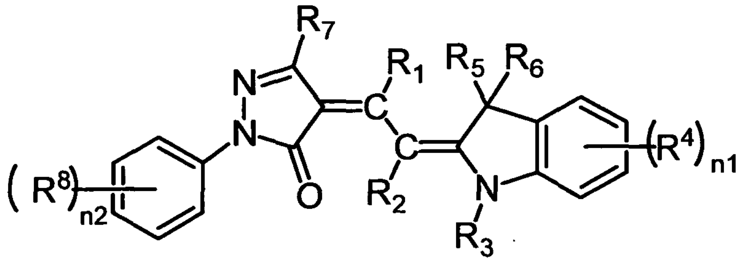

General formula (2)

wherein, in general formula (2), $R^1$, $R^2$, and $R^3$ are defined identically with $R^1$, $R^2$, and $R^3$ in general formula (1), respectively, each of $R^5$, $R^6$, and $R^7$ independently denotes a hydrogen atom or a monovalent substituent, each of $R^4$ and $R^8$ independently denotes a monovalent substituent, n1 denotes an integer ranging from 0 to 4, and n2 denotes an integer ranging from 0 to 5.

3. An optical recording medium comprising a visible information recording layer on a support, wherein the visible information recording layer comprises a dye denoted by the following general formula (3):

[Chem. 3]

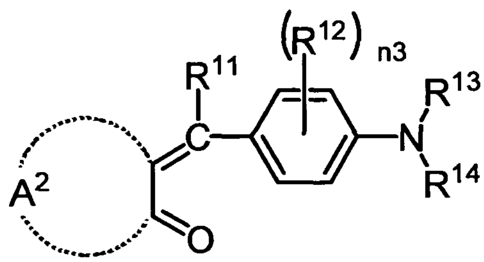

General formula (3)

wherein, in general formula (3), each of $R^{11}$, $R^{13}$, and $R^{14}$ independently denotes a hydrogen atom or a monovalent substituent, $R^{12}$ denotes a monovalent substituent, $A^2$ denotes an atom group forming a heterocyclic ring with carbon atoms bonded at either end, and n3 denotes an integer ranging from 0 to 4.

4. An optical recording medium comprising a visible information recording layer on a support, wherein the visible information recording layer comprises a dye denoted by the following general formula (4):

[Chem. 4]

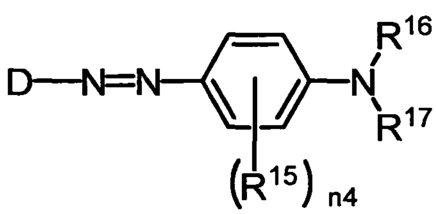

General formula (4)

wherein, in general formula (4), D denotes a diazonium salt-derived arocyclic group or aromatic heterocyclic group, each of $R^{16}$ and $R^{17}$ independently denotes a hydrogen atom or a monovalent substituent, $R^{15}$ denotes a monovalent substituent, and n4 denotes an integer ranging from 0 to 4.

**5.** An optical recording medium comprising a visible information recording layer on a support, wherein the visible information recording layer comprises a dye denoted by the following general formula (5):

[Chem. 5]

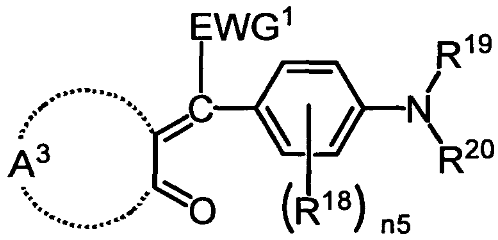

General formula (5)

wherein, in general formula (5), $A^3$ denotes an atom group forming a heterocyclic ring with carbon atoms bonded at either end, $EWG^1$ denotes an electron-withdrawing group, $R^{18}$ denotes a monovalent substituent, each of $R^{19}$ and $R^{20}$ independently denotes a hydrogen atom or a monovalent substituent, and n5 denotes an integer ranging from 0 to 4.

**6.** An optical recording medium comprising a visible information recording layer on a support, wherein the visible information recording layer comprises a dye denoted by the following general formula (6):

[Chem. 6]

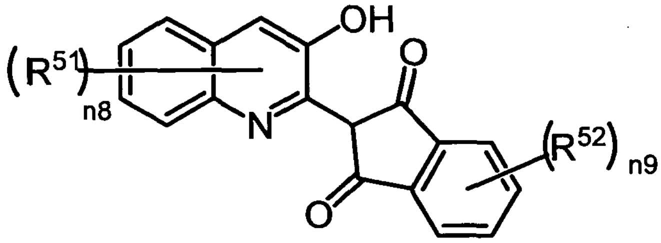

General formula (6)

wherein, in general formula (6), each of $R^{51}$ and $R^{52}$ independently denotes a monovalent substituent, n8 denotes an integer ranging from 0 to 5, and n9 denotes an integer ranging from 0 to 4.

**7.** An optical recording medium comprising a visible information recording layer on a support, wherein the visible information recording layer comprises a dye denoted by the following general formula (7):

[Chem. 7]

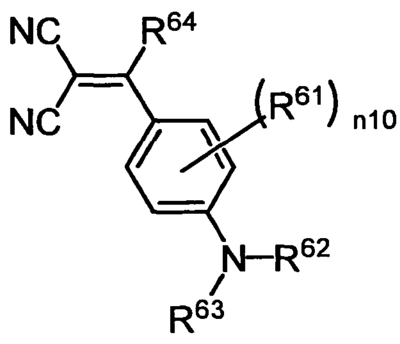

General formula (7)

wherein, in general formula (7), $R^{64}$ denotes a hydrogen atom or a monovalent substituent, $R^{61}$ denotes a monovalent substituent, each of $R^{63}$ and $R^{62}$ independently denotes a hydrogen atom, substituted or unsubstituted alkyl group, substituted or unsubstituted aryl group, or substituted or unsubstituted heterocyclic group, and n10 denotes an

integer ranging from 0 to 4.

**8.** An optical recording medium comprising a visible information recording layer on a support, wherein the visible information recording layer comprises a dye denoted by the following general formula (8):

[Chem. 8]

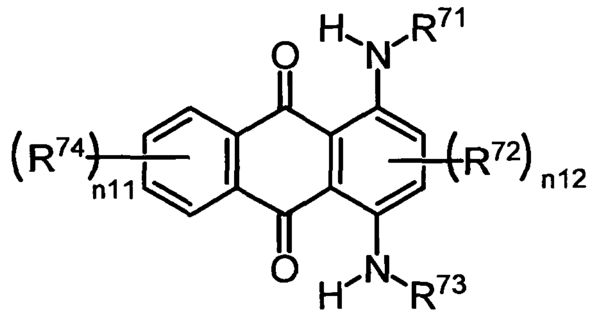

General formula (8)

wherein, in general formula (8), each of $R^{71}$ and $R^{73}$ independently denotes a hydrogen atom or a monovalent substituent, each of $R^{72}$ and $R^{74}$ independently denotes a monovalent substituent, n11 denotes an integer ranging from 0 to 4, and n12 denotes an integer ranging from 0 to 2.

**9.** An optical recording medium comprising a visible information recording layer on a support, wherein the visible information recording layer comprises a dye denoted by the following general formula (9):

[Chem. 9]

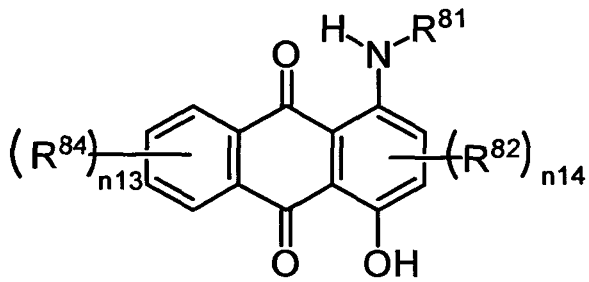

General formula (9)

wherein, in general formula (9), $R^{81}$ denotes a hydrogen atom or a monovalent substituent, each of $R^{82}$ and $R^{84}$ independently denotes a monovalent substituent, n13 denotes an integer ranging from 0 to 4, and n14 denotes an integer ranging from 0 to 2.

**10.** An optical recording medium comprising a visible information recording layer on a support, wherein the visible information recording layer comprises a dye denoted by the following general formula (10):

[Chem. 10]

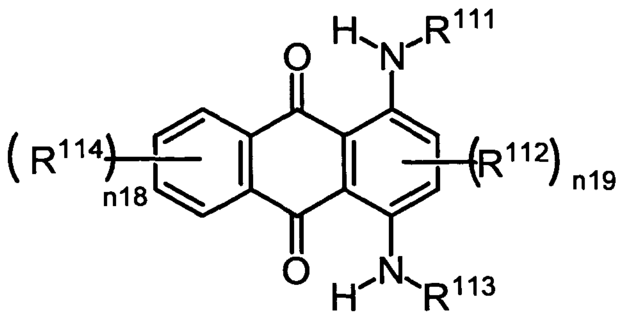

General formula (10)

wherein, in general formula (10), each of $R^{111}$ and $R^{113}$ independently denotes a hydrogen atom or a monovalent substituent, each of $R^{112}$ and $R^{114}$ independently denotes a monovalent substituent, n18 denotes an integer ranging from 0 to 4, and n19 denotes an integer ranging from 0 to 2.

**11.** The optical recording medium according to any of claims 1 to 10, wherein the monovalent substituent is a halogen atoms, or a substituted or unsubstituted alkyl groups, alkenyl groups, alkynyl groups, aryl groups, heterocyclic groups, cyano groups, alkoxy groups, aryloxy groups, acyloxy groups, carbamoyloxy groups, alkoxycarbonyloxy groups, aryloxycarbonyloxy groups, amino groups, acylamino groups, aminocarbonylamino groups, alkoxycarbonylamino groups, aryloxycarbonylamino groups, sulfamoylamino groups, alkylsulfonylamino groups, arylsulfonylamino groups, alkylthio groups, sulfamoyl groups, alkylsulfinyl groups, arylsulfinyl groups, alkylsulfonyl groups, arylsulfonyl groups, acyl groups, aryloxycarbonyl groups, alkoxycarbonyl groups, carbamoyl groups, arylazo groups, heterocyclic azo groups or imido groups.

**12.** The optical recording medium according to claim 2, wherein, in the general formula (2), $R^1$ denotes a hydrogen atom, $R^2$ denotes a hydrogen atom, $R^3$ denotes a substituted or unsubstituted alkyl group having 1 to 6 carbon atoms, $R^4$ denotes a substituted or unsubstituted alkyl group having 1 to 6 carbon atoms, $R^5$ denotes a substituted or unsubstituted alkyl group having 1 to 6 carbon atoms, $R^6$ denotes a substituted or unsubstituted alkyl group having 1 to 6 carbon atoms, $R^7$ denotes a substituted or unsubstituted dialkylamino group having 1 to 12 carbon atoms, $R^8$ denotes a substituted or unsubstituted alkoxycarbonyl group having 1 to 6 carbon atoms or a chlorine atom, n1 denotes an integer ranging from 0 to 3, and n2 denotes an integer ranging from 0 to 3.

**13.** The optical recording medium according to claim 3, wherein, in the general formula (3), $A^2$ denotes 2-pyrazoline-5-one comprising a substituent, $R^{11}$ denotes a hydrogen atom, $R^{12}$ denotes a substituted or unsubstituted alkyl group having 1 to 6 carbon atoms or a substituted or unsubstituted alkoxy group having 1 to 6 carbon atoms, $R^{13}$ denotes a substituted or unsubstituted alkyl group having 1 to 6 carbon atoms, $R^{14}$ denotes a substituted or unsubstituted alkyl group having 1 to 6 carbon atoms, and n3 is 0 or 1.

**14.** The optical recording medium according to claim 4, wherein, in the general formula (4), D denotes a monovalent group derived from an isothiazole ring comprising a substituent or a monovalent group derived from a 1,3,4-thiadiazole ring comprising a substituent, $R^{15}$ denotes an acylamino group, $R^{16}$ denotes a substituted or unsubstituted alkyl group having 1 to 6 carbon atoms, $R^{17}$ denotes a substituted or unsubstituted alkyl group having 1 to 6 carbon atoms, and n4 denotes an integer ranging from 0 to 4.

**15.** The optical recording medium according to claim 5, wherein, in the general formula (5), $A^3$ denotes 2-pyrazoline-5-one comprising a substituent, $EWG^1$ denotes a cyano group, $R^{18}$ denotes a substituted or unsubstituted alkyl group having 1 to 6 carbon atoms or a substituted or unsubstituted alkoxy group having 1 to 6 carbon atoms, $R^{19}$ denotes a substituted or unsubstituted alkyl group having 1 to 6 carbon atoms, $R^{20}$ denotes a substituted or unsubstituted alkyl group having 1 to 6 carbon atoms, and n5 denotes an integer ranging from 0 to 4.

**16.** The optical recording medium according to claim 6, wherein, in the general formula (6), $R^{51}$ denotes an alkyl group having 1 to 6 carbon atoms, $R^{52}$ denotes a substituted or unsubstituted carbamoyl group or aryloxycarbonyl group having 6 to 10 carbon atoms or alkoxycarbonyl group having 1 to 6 carbon atoms, n8 denotes an integer ranging from 0 to 3, and n9 denotes an integer ranging from 0 to 3.

**17.** The optical recording medium according to claim 7, wherein, in the general formula (7), $R^{61}$ denotes a substituted or unsubstituted alkyl group having 1 to 6 carbon atoms, $R^{62}$ denotes a substituted or unsubstituted alkyl group having 1 to 6 carbon atoms, $R^{63}$ denotes a substituted or unsubstituted alkyl group having 1 to 6 carbon atoms, $R^{64}$ denotes a hydrogen atom, and n10 denotes an integer ranging from 0 to 4.

**18.** The optical recording medium according to claim 8, wherein, in the general formula (8), $R^{71}$ denotes a hydrogen atom, $R^{72}$ denotes a substituted or unsubstituted aryloxy group having 6 to 12 carbon atoms, $R^{73}$ denotes a hydrogen atom, n11 denotes 0, and n12 denotes an integer ranging from 0 to 2.

**19.** The optical recording medium according to claim 9, wherein, in the general formula (9), $R^{81}$ denotes a hydrogen atom, $R^{82}$ denotes an aryloxy group, n13 denotes 0, and n14 denotes 1 or 2.

**20.** The optical recording medium according to claim 10, wherein, in the general formula (10), $R^{111}$ denotes a substituted or unsubstituted alkyl group having 1 to 6 carbon atoms or a substituted or unsubstituted aryl group having 6 to 10 carbon atoms, $R^{113}$ denotes a substituted or unsubstituted alkyl group having 1 to 6 carbon atoms or a substituted or unsubstituted aryl group having 6 to 10 carbon atoms, n18 is 0, and n19 is 0.

**21.** The optical recording medium according to any of claims 1 to 20, wherein the visible information recording layer further comprises a cyanine dye denoted by the general formula (I):

[Chem. 11]

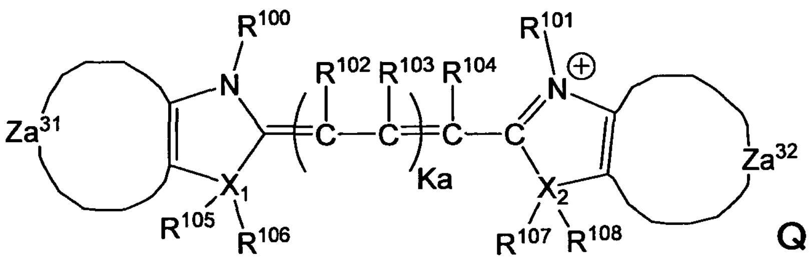

General formula (I)

wherein, in general formula (I), each of $Za^{31}$ and $Za^{32}$ independently denotes an atom group forming a carbon ring or heterocyclic ring, each of $R^{100}$, $R^{101}$, $R^{102}$, $R^{103}$, $R^{104}$, $R^{105}$, $R^{106}$, $R^{107}$, and $R^{108}$ independently denotes a hydrogen atom or a monovalent substituent, each of $X_1$ and $X_2$ independently denotes a carbon atom or a hetero atom, Ka denotes 2 or 3, plural $R^{102}$s and $R^{103}$s present may be identical or different, and Q denotes a monovalent anion.

**22.** The optical recording medium according to any of claims 1 to 21, which further comprises a recording layer capable of recording and/or reproducing information by irradiation of a laser beam.

**23.** The optical recording medium according to claim 22, which comprises a first support, the recording layer, a reflective layer, the visible information recording layer, and a second support in this order.

**24.** The optical recording medium according to any of claims 1 to 23, which is disk-shaped.

**25.** A method of recording visible information on the visible information recording layer of the optical recording medium according to any of claims 22 to 24, wherein
the visible information is recorded by using the same laser bean as that used in recording information on the recording layer.

**26.** A method of recording visible information on the visible information recording layer of the optical recording medium according to claim 24, wherein
the visible information is recorded by using a laser beam that oscillates in a radial direction of the optical recording medium as well as is irradiated plural times on approximately identical paths.

[Fig. 1]

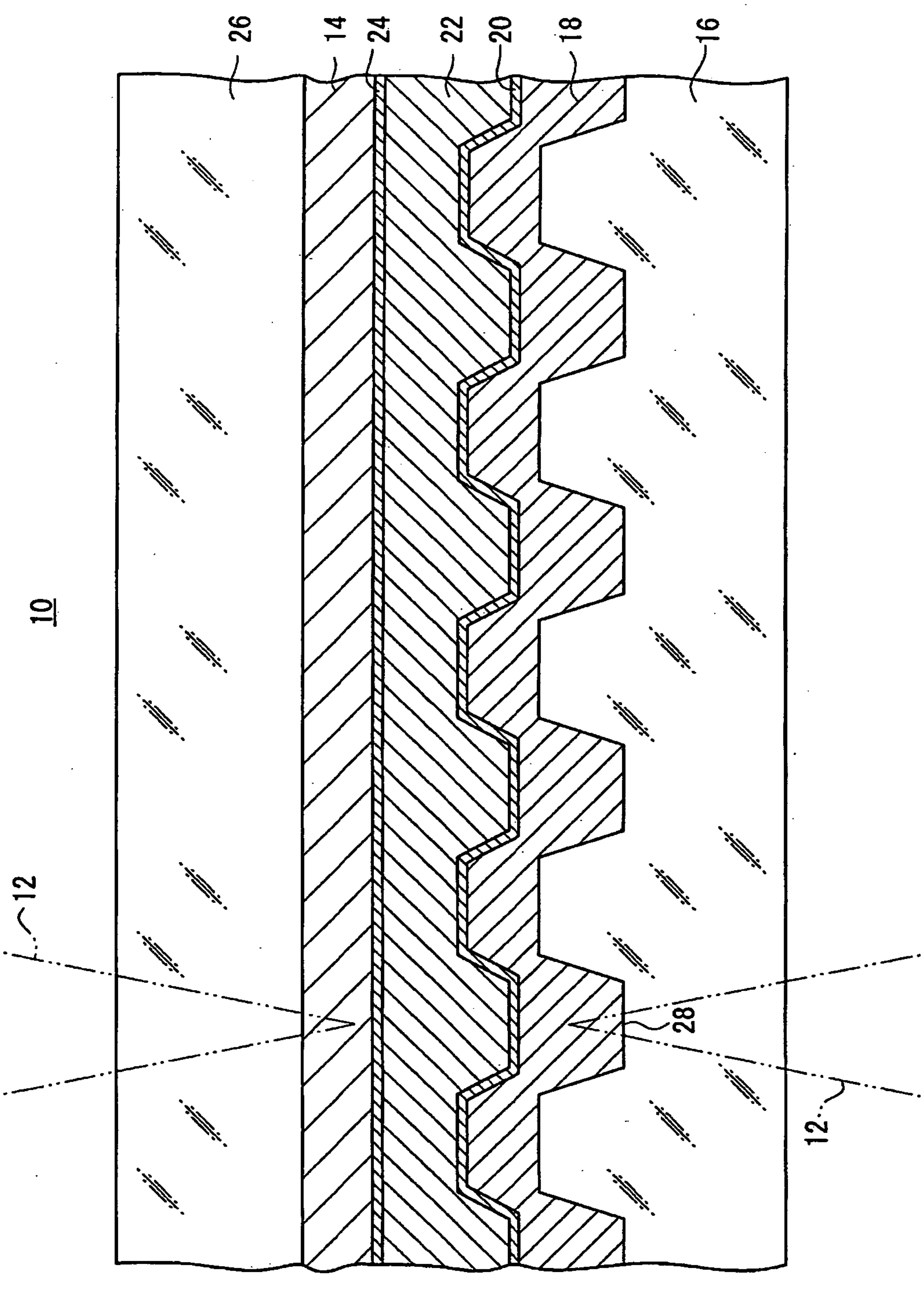

[Fig. 2]

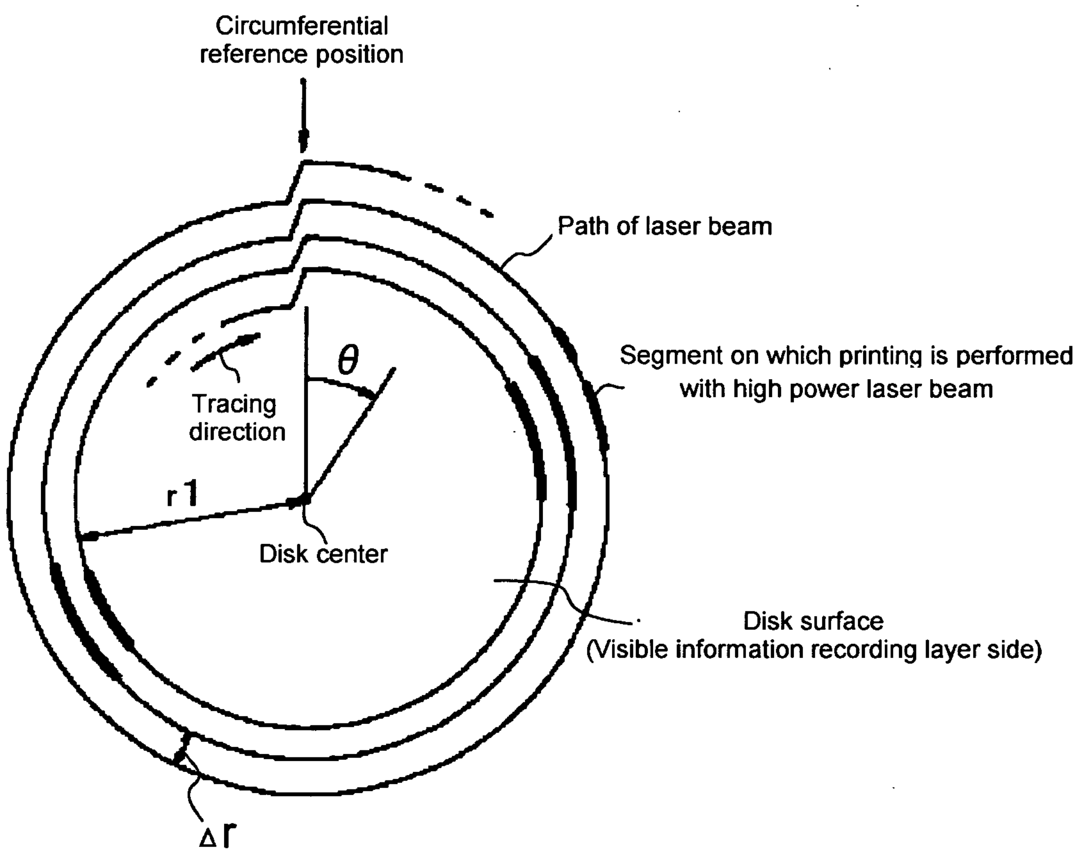
Circumferential
reference position
Path of laser beam
Segment on which printing is performed
with high power laser beam
θ
Tracing
direction
r1
Disk center
Disk surface
(Visible information recording layer side)
Δr

[Fig. 3]

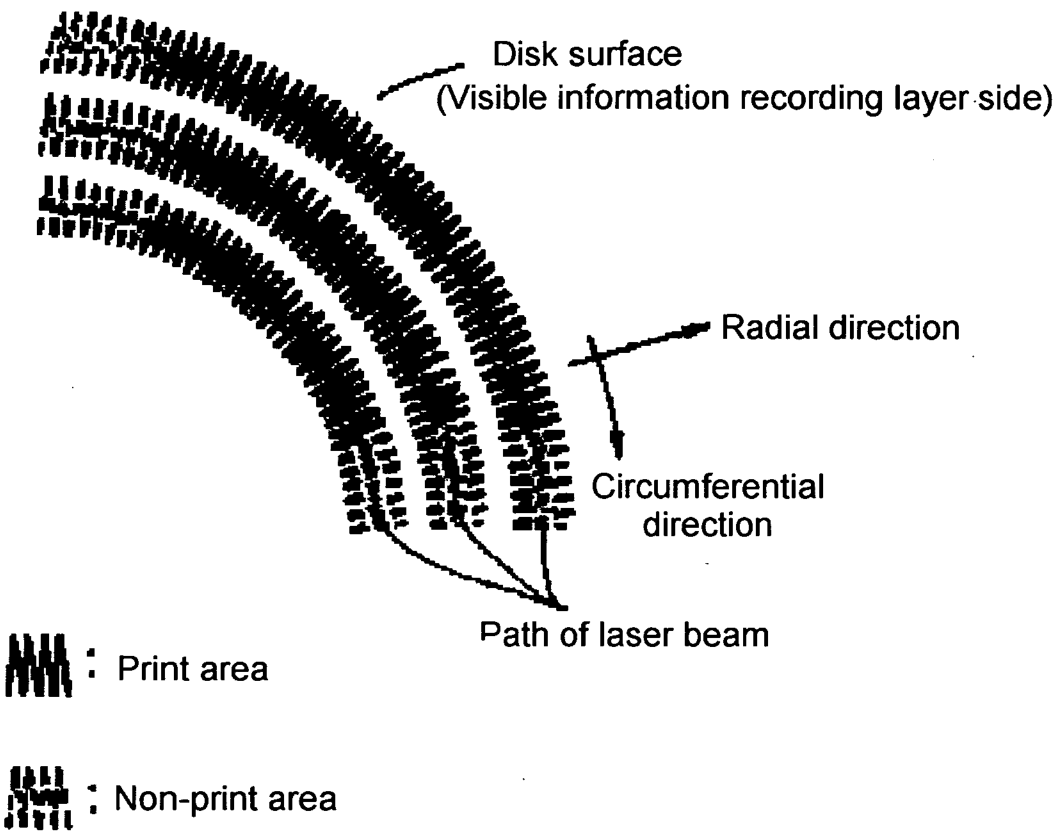
Disk surface
(Visible information recording layer side)
Radial direction
Circumferential direction
Path of laser beam
: Print area
: Non-print area

**INTERNATIONAL SEARCH REPORT**

International application No.
PCT/JP2007/061700

A. CLASSIFICATION OF SUBJECT MATTER
*B41M5/26*(2006.01)i, *B41M5/28*(2006.01)i, *B41M5/36*(2006.01)i, *G11B7/0045*(2006.01)i, *G11B7/24*(2006.01)i

According to International Patent Classification (IPC) or to both national classification and IPC

B. FIELDS SEARCHED

Minimum documentation searched (classification system followed by classification symbols)
B41M5/26, B41M5/28, B41M5/36, G11B7/0045, G11B7/24

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
CAplus(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br><br>Y | WO 2006/100916 A1 (Fuji Photo Film Co., Ltd.), 28 September, 2006 (28.09.06), Par. Nos. [0012] to [0022], [0026] to [0032], [0037], [0038], [0082] to [0084], [0089] to [0098]; Fig. 1 & JP 2006-260730 A | 1,2,11,12, 22-25<br>3-10,13-21, 26 |
| Y | JP 2002-203321 A (Yamaha Corp.), 19 July, 2002 (19.07.02), Par. No. [0023]; Fig. 16 & US 2002/0191517 A1 | 26 |
| X | JP 8-216514 A (Eastman Kodak Co.), 27 August, 1996 (27.08.96), Par. Nos. [0018] to [0031] & US 5491045 A & EP 0716933 A1 | 8,18 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>04 September, 2007 (04.09.07) | Date of mailing of the international search report<br>25 September, 2007 (25.09.07) |
| Name and mailing address of the ISA/<br>Japanese Patent Office<br>Facsimile No. | Authorized officer<br><br>Telephone No. |

Form PCT/ISA/210 (second sheet) (April 2005)

**INTERNATIONAL SEARCH REPORT**

International application No. PCT/JP2007/061700

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | WO 2006/038618 A (Fuji Photo Film Co., Ltd.), 13 April, 2006 (13.04.06), Par. Nos. [0072], [0116] to [0135] & JP 2006-107620 A & JP 2006-107670 A & JP 2006-155692 A | 21<br>1-20,22-26 |
| Y | JP 2003-103935 A (Mitsubishi Chemical Corp.), 09 April, 2003 (09.04.03), Par. Nos. [0010] to [0025] (Family: none) | 3,13 |
| Y | JP 2-38462 A (CIBA-Geigy AG.), 07 February, 1990 (07.02.90), Claim 12; page 7, upper right column, line 17 to lower left column, line 5 & CH 675396 A5 & DE 3919495 A1 & GB 2219805 A & US 4916234 A & US 4950754 A & US 4997805 A | 5,15 |
| Y | JP 10-058828 A (Mitsui Toatsu Chemicals, Inc.), 03 March, 1998 (03.03.98), Claim 1; Par. No. [0061] (Family: none) | 4,14 |
| Y | JP 11-53758 A (Mitsubishi Chemical Corp.), 26 February, 1999 (26.02.99), Par. Nos. [0013], [0014] (Family: none) | 6,7,16,17 |
| Y | JP 9-54980 A (Mitsubishi Chemical Corp.), 25 February, 1997 (25.02.97), Par. Nos. [0042] to [0044], [0049] to [0051] (Family: none) | 8-10,18-20 |

Form PCT/ISA/210 (continuation of second sheet) (April 2005)

**INTERNATIONAL SEARCH REPORT**

International application No.
PCT/JP2007/061700

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
See extra sheet.

1. ☒ As all required additional search fees were timely paid by the applicant, this international search report covers all searchable claims.
2. ☐ As all searchable claims could be searched without effort justifying an additional fee, this Authority did not invite payment of any additional fee.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** the
- ☐ The additional search fees were accompanied by the applicant's protest and, where applicable, payment of a protest fee.
- ☐ The additional search fees were accompanied by the applicant's protest but the applicable protest fee was not paid within the time limit specified in the invitation.
- ☒ No protest accompanied the payment of additional search fees.

Form PCT/ISA/210 (continuation of first sheet (2)) (April 2005)

**INTERNATIONAL SEARCH REPORT**

International application No.
PCT/JP2007/061700

Continuation of Box No.III of continuation of first sheet(2)

The matter common among claims 1-26 is an optical recording medium having a visible information recording layer on a substrate.

However, the search has revealed that the common matter is not novel, since it was disclosed in "WO 2006/100916 A1 (Fuji Photo Film Co., Ltd.), 28 September 2006 (28.09.06)".

As a result, the common matter is not the special technical feature within the meaning of PCT Rule 13.2, second sentence, since it does not explicitly specify any contribution over the prior art.
Therefore, there is no matter common to all the claims.

Since there exists no other common matter which can be considered as a special technical feature within the meaning of PCT Rule 13.2, second sentence, no technical relationship within the meaning of PCT Rule 13 between the different inventions can be seen.

Hence, it is apparent that the inventions of claims 1-26 do not comply with the requirement of unity of invention.

Moreover, it is admitted that this international application has the following invention groups, and that the number of invention is four.
Here, the requirement of unity of invention is not examined on the inventions which were discovered at the time of prior art examinations.

1. The invention of claims 1, 2, 4, 6-12, 16-20 and 22-26 is an optical recording medium containing coloring matters having visible information recording layers of general formulas (1), (2), (4) and (6)-(10).
2. The invention of claims 3, 5, 13 and 15 is an optical recording medium containing coloring matters having visible information recording layers of general formulas (3) and (5).
3. The invention of claim 14 is an optical recording medium containing coloring matters having visible information recording layers of a general formula (4), in which: D is either a monovalent group derived from an isothiazole ring having a substituent group or a monovalent group derived from a 1, 3, 4-thiazole ring having a substituent group; R15 is an acylamino group; R16 is a substituted or unsubstituted alkyl group having a carbon numbers 1-6; R17 is a substituted or unsubstituted alkyl group having a carbon number of 1-6; and n4 is an integer ranging from 0 to 4.
4. The invention of claim 21 is an optical recording medium a containing cyanine coloring matter expressed by a general formula (I) in addition to a coloring matter of general formulas (1)-(10).

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007016321 A
- JP 11066617 A
- US 059442 A
- US 3770370 A
- JP 2004051873 A
- DE 2316755
- JP 7137455 A
- JP 61031292 A
- JP 4074690 A
- JP 8127174 A
- JP 11053758 A
- JP 11334204 A
- JP 11334205 A
- JP 11334206 A
- JP 11334207 A
- JP 2000043423 A
- JP 2000108513 A
- JP 2000158818 A
- JP 2003203348 A
- US 20030117932 A1
- US 2003242750 A1
- JP 2002203321 A
- US 7015939 B


### Non-patent literature cited in the description


- The Theory of the Photographic Process. Macmillan, 1977, 198
- **F. M. Harmer.** Heterocyclic CompoundsCyanine Dyes and Related Compounds. John Wiley & Sons, 1964
- Lange's Handbook of Chemistry. McGraw-Hill, 1979
- The Domain of Chemistry. Nankodo, 1979, 96-103
- *J. Chem. Soc. Perkin Transfer I,* 1977, 2047
- **Chapman.** Merocyanine Dye-Donor Element Used in Thermal Dye Transfer
- Cyanine Dyes and Related Compounds. John Wjley & Sons, 1964